(19) Europäisches Patentamt

European Patent Office

Office européen des brevets

(11) **EP 3 767 558 B1**

(12) **FASCICULE DE BREVET EUROPEEN**

(45) Date de publication et mention de la délivrance du brevet:
**19.06.2024 Bulletin 2024/25**

(21) Numéro de dépôt: **20185824.8**

(22) Date de dépôt: **14.07.2020**

(51) Classification Internationale des Brevets (IPC):
**G06F 11/30** (2006.01)   **G06Q 10/20** (2023.01)
**G06F 11/34** (2006.01)

(52) Classification Coopérative des Brevets (CPC):
**G06Q 10/20; G06F 11/3006; G06F 11/3419;
G06F 11/3452; G06F 11/3466**

(54) **PROCEDE ET DISPOSITIF DE DETERMINATION D'UNE DUREE ESTIMEE AVANT UN INCIDENT TECHNIQUE DANS UNE INFRASTRUCTURE INFORMATIQUE A PARTIR DE VALEURS D'INDICATEURS DE PERFORMANCE**

VERFAHREN UND VORRICHTUNG ZUR BESTIMMUNG EINER GESCHÄTZE DAUER BIS EINEM TECHNISCHEN VORFALL IN EINER IT-INFRASTRUKTUR BASIEREND AUF LEISTUNGSINDIKATORWERTEN

METHOD AND DEVICE FOR DETERMINING AN ESTIMATED DURATION BEFORE A TECHNICAL INCIDENT IN AN IT INFRASTRUCTURE FROM PERFORMANCE INDICATOR VALUES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.07.2019 FR 1907985**

(43) Date de publication de la demande:
**20.01.2021 Bulletin 2021/03**

(73) Titulaires:
• **Bull SAS**
  **78340 Les Clayes-sous-Bois (FR)**
• **Commissariat à l'Energie Atomique et aux Energies
  Alternatives
  75015 Paris (FR)**

(72) Inventeurs:
• **ROY, Jean-François**
  **38640 Claix (FR)**
• **SGHIOUER, Kaoutar**
  **60200 Compiègne (FR)**
• **PORCHER, Guillaume**
  **38100 Grenoble (FR)**
• **SEROUL, Pierre**
  **38650 Sinard (FR)**

(74) Mandataire: **Cabinet Camus Lebkiri
25 rue de Maubeuge
75009 Paris (FR)**

(56) Documents cités:
**EP-A1- 3 051 421      FR-A1- 3 066 844
US-A1- 2019 163 546**

• **KALE AMIT A ET AL: "Machine learning based dynamic cause maps for condition monitoring and life estimation", 2018 IEEE INTERNATIONAL RELIABILITY PHYSICS SYMPOSIUM (IRPS), IEEE, 11 mars 2018 (2018-03-11), XP033337424, DOI: 10.1109/IRPS.2018.8353562**
• **Vepa Atamuradov ET AL: "Prognostics and Health Management for Maintenance Practitioners -Review, Implementation and Tools Evaluation", International Journal of Prognostics and Health Management, 1 janvier 2017 (2017-01-01), pages 1-31, XP055650659, Extrait de l'Internet:
URL:https://www.phmsociety.org/sites/phmso ciety.org/files/phm_submission/2016/ijphm_ 17_060.pdf [extrait le 2019-12-09]**

EP 3 767 558 B1

**EP 3 767 558 B1**

### Description

La présente invention concerne le domaine de la maintenance prédictive et plus particulièrement un dispositif, un procédé, un programme, et un support de stockage pour la détection d'anomalies au sein d'un environnement hétérogène et la détermination d'une durée estimée avant défaillance d'une infrastructure informatique, en particulier à partir de données générées par des sondes dédiées à la surveillance d'indicateurs de performance de l'infrastructure informatique.

### [Art antérieur]

Les infrastructures informatiques sont composées d'un nombre de plus en plus grand de composants interconnectés que cela soit des composants matériels ou des composants logiciels. Dans ces infrastructures informatiques, la multiplicité de ces composants entraine un risque élevé de défaillance du système. En outre, ces infrastructures informatiques sont souvent hétérogènes et changeantes entrainant une diversité des composants matériels et des composants logiciels d'une part et une évolution de leurs caractéristiques dans le temps d'autre part.

Dans les infrastructures informatiques complexes et distribuées récentes, il est souhaitable de fournir des fonctions autonomes dans le système informatique lui-même pour éliminer la nécessité d'une surveillance permanente du système par un administrateur humain. Cela a conduit au développement de procédés ou de dispositifs de surveillance d'infrastructure informatique permettant d'identifier des anomalies dans les comportements des différents composants matériel ou logiciels de l'infrastructure informatique.

Ainsi, avec ces procédés ou dispositifs de surveillance, un incident technique (e.g. une erreur, un ralentissement, un échec, etc.) qui se produit dans une infrastructure informatique, est susceptible d'être détecté sous la forme d'anomalies dans une ou plusieurs mesures d'indicateurs de performance. Ces mesures peuvent par exemple correspondre à des mesures de performance (par exemple, le temps moyen de réponse du serveur, l'histogramme de distribution horaire du serveur, la page taille du fichier, le nombre de pages lentes, le nombre de transactions, etc.), les paramètres du réseau (par exemple, le débit du réseau, la latence du réseau, etc.), et des mesures système (par exemple, l'utilisation du CPU, utilisation de la mémoire, etc.). Des techniques de surveillance d'indicateurs de performance sont bien connues pour la surveillance d'infrastructures informatiques avec par exemple l'utilisation de sondes telles que des moniteurs de ressources capables de surveiller un système informatique et de fournir des valeurs de performances réseau, applicatif et / ou système.

Néanmoins, dans les infrastructures informatiques complexes et distribuées récentes les valeurs observables d'indicateurs de performance varient fortement au fil du temps, et les techniques dans lesquelles les valeurs observées sont directement utilisées sont difficiles à appliquer parce que les valeurs de seuil de détection ne sont pas efficaces. En outre, un incident apparemment bénin peut déboucher, plusieurs heures ou jours après, sur une défaillance massive de l'installation. Ainsi, il existe un besoin pour une solution capable de traiter les valeurs observées de façon à identifier au plus juste les indicateurs de performance en anomalie.

En outre, les dispositifs ou procédés de surveillance existant se contentent généralement de reporter des anomalies. Or, avec d'une part la complexité et d'autre part la taille croissante des infrastructures informatiques, les services de maintenance sont submergés par des alertes d'anomalie ou de défaillance.

La demande de brevet français FR3066844A1 intitulée « Procédé de prévision de la survenue d'une défaillance sur un appareil dans le temps » est connue de l'état de la technique.

De plus, au-delà de la génération d'alertes qui pourront être caractérisées par une valeur de risque de défaillance ou un niveau de criticité, l'équipe de maintenance pourrait bénéficier d'une information sur la durée estimée avant l'incident technique (i.e. défaillance). Le cas échéant, ils pourraient prioriser leur intervention en fonction de la criticité d'une part et de l'urgence d'autre part.

Plus précisément, il existe un besoin pour de nouvelles solutions permettant la prévision des besoins de maintenance prédictive sur une infrastructure informatique capable de réduire les temps d'intervention du service de maintenance et de réduire les défaillances sur l'infrastructure informatique surveillée et même de permettre l'intervention du service de maintenance avant le déclenchement de l'interruption de service, de réduire ainsi les temps d'intervention du service de maintenance et de réduire l'occurrence des défaillances sur l'infrastructure informatique surveillée.

### [Problème technique]

L'invention a donc pour but de remédier aux inconvénients de l'art antérieur. En particulier, l'invention a pour but de proposer un procédé de détermination d'une durée estimée avant un compte les modifications de l'infrastructure. L'invention a également pour but de proposer un dispositif capable d'exécuter un tel procédé ainsi qu'un programme et un support d'enregistrement portant ce programme.

**[Description succincte]**

A cet effet, un premier aspect de l'invention propose un procédé de détermination d'une durée estimée avant un incident technique dans une infrastructure informatique, ledit procédé étant exécuté par un dispositif informatique, ledit dispositif informatique comportant un module de traitement de données, un module de stockage configuré pour mémoriser au moins une base de corrélation, ladite base de corrélation comportant des valeurs de durée avant passage en anomalie entre indicateurs de performance, et un module de collecte, ledit procédé comprenant :

- une étape de réception, par le module de collecte, de valeurs d'indicateurs de performance d'une infrastructure informatique,
- une étape d'identification d'indicateurs de performance en anomalie, par le module de traitement de données, ladite identification comportant une analyse des valeurs d'indicateurs de performance de façon à identifier des valeurs anormales et des indicateurs de performance associés à ces valeurs anormales,
- une étape d'identification de premiers indicateurs à risque, par le module de traitement de données à partir de la base de corrélation, lesdits premiers indicateurs à risques étant des indicateurs de performances corrélés aux indicateurs de performance en anomalie identifiés,
- une étape d'identification d'autres indicateurs à risque, par le module de traitement de données à partir de la base de corrélation, lesdits autres indicateurs à risque étant des indicateurs de performances corrélés directement ou indirectement aux premiers indicateurs de performance à risque identifiés, et
- une étape de détermination, par le module de traitement de données, d'une durée estimée avant un incident technique de l'infrastructure informatique, ladite durée estimée avant un incident technique étant calculée à partir des valeurs de durée avant passage en anomalie de la base de corrélation pour les premiers indicateurs à risque identifiés et les autres indicateurs à risque identifiés.

Un tel procédé permet, grâce à la détermination d'une durée estimée avant un incident technique, d'anticiper la survenue d'un incident technique au sein d'une infrastructure informatique. L'anticipation des incidents est rendue complexe du fait de la grande variabilité des métriques de fonctionnement de ces infrastructures. Ici, le procédé prend avantage du haut niveau d'interdépendance des composants logiciels et matériel sur les infrastructures informatiques rendant le management de ces infrastructures hautement complexe.

Un tel procédé permet, grâce notamment à l'utilisation de valeurs de durée avant passage en anomalie entre indicateurs de performance corrélés, de prévoir le moment estimé de la survenue d'un incident technique au sein d'une infrastructure informatique.

En particulier, la collecte de valeurs de métriques (i.e. indicateurs de performance) et leur traitement permet de détecter un ou plusieurs indicateurs de performance en anomalie à partir de valeurs anormales puis d'enrichir ces indicateurs de performance en anomalie avec des données relatives à des indicateurs de performance à risque de devenir en anomalie.

Ces données peuvent ensuite être analysées pour identifier un plus court chemin entrainant un risque d'incident technique puis ce plus court chemin couplé à des valeurs de durée avant passage en anomalie entre indicateurs de performance corrélés permet d'estimer une durée avant incident technique.

Ainsi, un procédé selon l'invention permet de détecter et prévoir des défaillances à partir de signaux faibles qui auraient échappé aux services de suivi (ou qui ont déjà échappé à la vigilance des services de surveillances) et au surplus de générer une durée estimée avant un incident technique.

**Selon d'autres caractéristiques du procédé :**

- la valeur de durée avant passage en anomalie correspond à la durée entre une survenue d'une valeur anormale pour l'indicateur de performance concerné et une survenue d'une valeur anormale pour un indicateur de performance corrélé à l'indicateur de performance concerné. Ainsi, il est possible de convertir le chemin le plus court en une chaine de valeurs temporelles qui additionnées peuvent donner une indication sur la durée estimée avant incident technique.

- l'étape de détermination comporte un calcul, à partir des premiers indicateurs à risque identifiés et des autres indicateurs à risque identifiés, de plusieurs chemins entrainant un risque d'incident technique. Ainsi, la durée estimée avant un incident technique de l'infrastructure informatique pourra être sélectionnée entre plusieurs alternatives et les administrateurs pourront être alerté sur l'ensemble des risques de défaillance à surveiller.

- l'étape de détermination comporte un calcul, à partir des premiers indicateurs à risque identifiés et des autres indicateurs à risque identifiés, d'un plus court chemin entrainant un risque d'incident technique. L'utilisation d'un calcul du plus court chemin permet de rapidement identifier un potentiel enchainement d'anomalie qui conduira le plus rapidement à une défaillance de l'infrastructure informatique.

- l'étape d'identification d'indicateurs de performance en anomalie est précédée par une étape de traitement des données collectées, ladite étape de traitement des données collectées comportant une suppression d'une composante normale. Cette composante normale est par exemple prise en compte heure par heure, jour par jour avec une répétition hebdomadaire. Néanmoins selon les indicateurs, la période de répétition et la fréquence d'échantillonnage peuvent être ajustés. Par exemple, si des données (e.g. valeurs d'indicateurs de performance de l'infrastructure informatique) sur plusieurs années sont disponibles alors la composante mensuelle pourrait être prise en compte.

- l'identification des valeurs anormales est réalisée par une méthode statistique permettant de générer des valeurs de distances à la normalité.

- l'étape d'identification d'indicateurs en anomalie comporte, pour chaque indicateur de performance, le calcul d'une valeur attendue puis une comparaison entre les valeurs attendues et les valeurs collectées.

- l'identification d'indicateurs de performance de l'infrastructure informatique corrélés aux indicateurs en anomalie identifiés est réalisée sur la base de corrélations causales inter-indicateurs de performance. Par exemple, la base de corrélation peut mémoriser aussi des liens de causalité et ces liens de causalité peuvent être étiquetés de façon différenciée par rapport aux liens de corrélations non causale.

- Il comporte en outre une étape de calcul d'une valeur de risque d'incident technique. En effet, grâce aux données sur les indicateurs de performance à risque il est possible de calculer une valeur de risque d'incident technique reflétant un comportement probable de l'infrastructure 5 informatique dans les heures à venir.

- il comporte en outre une étape de détermination, par le module de traitement de données, d'une valeur d'indice de performance de prédiction d'anomalies comportant : une réception de nouvelles valeurs d'indicateurs de performance ; une identification de nouveaux indicateurs en anomalie confirmés, ladite identification comportant une analyse des nouvelles valeurs d'indicateurs de performance de façon à identifier des valeurs anormales et des indicateurs de performance associés à ces valeurs anormales, et une comparaison des indicateurs à risque identifiés aux nouveaux indicateurs en anomalie confirmés de façon à générer une valeur d'indice de performance. Une telle étape permet, grâce à la détermination d'un indice de performance, de vérifier si d'anticipation de la survenue d'un incident technique au sein d'une infrastructure informatique est correcte. Avantageusement, la vérification peut être réalisée en continu et en temps réel. Ainsi, un procédé selon l'invention permet d'évaluer au cours du temps la performance de prédiction d'un procédé de maintenance prédictive dédié à la détection et prévision des défaillances à partir de signaux faibles.

- il comporte en outre une étape de génération de valeurs de durée avant passage en anomalie actualisées, une valeur de durée avant passage en anomalie correspondant à une durée entre une survenue d'une valeur anormale pour l'indicateur de performance concerné et une survenue d'une valeur anormale pour un indicateur de performance corrélé à l'indicateur de performance concerné. Dans le cas de valeurs de durée avant passage en anomalie actualisées cela correspond à la durée entre le passage en anomalie d'un indicateur de performance en anomalie et le passage en anomalie d'un indicateur de performance à risque lui étant corrélé. Ainsi, le procédé permet d'acquérir des données réelles et en temps réel sur la dynamique de progression des anomalies pouvant conduire à un incident technique.

- la base de corrélation comporte des valeurs de durées avant passage en anomalie entre indicateurs de performance, et le procédé comporte en outre une étape de modification des valeurs de durées avant passage en anomalie entre indicateurs de performance mémorisées dans la base de corrélation en fonction des valeurs de durée avant passage en anomalie actualisées. Ainsi, il est possible au cours du temps et de préférence en continu de mettre à jours les éléments utilisés dans la prédiction d'anomalies et/ou d'incident technique. Un procédé selon l'invention sera alors plus juste et peu sensible aux évolutions de l'infrastructure informatique ou de son utilisation.

- Il comporte une étape de mémorisation pour chaque indicateur de performance de : un identifiant unique et au moins un identifiant unique d'un autre indicateur de performance lui étant corrélé avec une valeur de durée avant passage en anomalie de cet autre indicateur de performance.

L'invention porte en outre sur un programme d'ordinateur pour la détermination d'une durée estimée avant un incident technique dans une infrastructure informatique apte à, de préférence configuré pour, mettre en oeuvre un procédé de détermination selon l'invention.

L'invention porte en outre sur un support d'enregistrement sur lequel est enregistré un programme d'ordinateur pour la détermination d'une durée estimée avant incident technique dans une infrastructure informatique selon l'invention.

L'invention porte en outre sur un dispositif informatique de détermination d'une durée estimée avant un incident technique dans une infrastructure informatique, ledit dispositif informatique comportant un module de traitement de données, un module de stockage configuré pour mémoriser au moins une base de corrélation entre indicateurs de performance, ladite base de corrélation comportant des valeurs de durée avant passage en anomalie entre indicateurs de performance corrélés, et un module de collecte,

ledit module de collecte étant apte à, de préférence configuré pour recevoir des valeurs d'indicateurs de performance de l'infrastructure informatique,
ledit module de traitement de données étant configuré pour exécuter les étapes suivantes :

- une étape d'identification d'indicateurs de performance en anomalie, ladite identification comportant une analyse des valeurs d'indicateurs de performance de façon à identifier des valeurs anormales et des indicateurs de performance associés à ces valeurs anormales,
- une étape d'identification de premiers indicateurs à risque, à partir de la base de corrélation, lesdits premiers indicateurs à risques étant des indicateurs de performances corrélés aux indicateurs de performance en anomalie identifiés,
- une étape d'identification d'autres indicateurs à risque, à partir de la base de corrélation, lesdits autres indicateurs à risques étant des indicateurs de performances corrélés directement ou indirectement aux premiers indicateurs de performance à risque identifiés, et
- une étape de détermination d'une durée estimée avant un incident technique, ladite durée estimée avant un incident technique étant calculée à partir des valeurs de durée avant passage en anomalie de la base de corrélation pour les premiers indicateurs à risque identifiés et les autres indicateurs à risque identifiés.

Un dispositif informatique selon l'invention présente les mêmes avantages qu'un procédé conforme à l'invention et permet en particulier de détecter et prévoir des défaillances à partir de signaux faibles qui auraient échappé aux services de suivi (ou qui ont déjà échappé à la vigilance des services de surveillances) et au surplus de générer une durée estimée avant incident technique.

D'autres avantages et caractéristiques de l'invention apparaitront à la lecture de la description suivante donnée à titre d'exemple illustratif et non limitatif, en référence aux Figures annexées :

La Figure 1 représente une illustration schématique d'un procédé de détermination d'une durée estimée avant incident technique sur une infrastructure informatique selon l'invention. Les étapes encadrées par des pointillés sont facultatives.

La Figure 2 représente une illustration schématique d'un processus préalable de calibration.

La Figure 3 représente une illustration graphique d'une prédiction d'anomalie dans une infrastructure informatique avec prise en compte des durées avant passage en anomalie et en particulier d'une détermination d'une durée estimée avant incident technique.

La Figure 4 représente un schéma d'un dispositif de détermination d'une durée estimée avant incident technique dans une infrastructure informatique selon l'invention.

Des aspects de la présente invention sont décrits en référence à des organigrammes et / ou à des schémas fonctionnels de procédés, d'appareils (systèmes) et de produits de programme d'ordinateur selon des modes de réalisation de l'invention. Sur les figures, les organigrammes et les schémas fonctionnels illustrent l'architecture, la fonctionnalité et le fonctionnement d'implémentations possibles de systèmes, de procédés et de produits de programme d'ordinateur selon divers modes de réalisation de la présente invention. A cet égard, chaque bloc dans les organigrammes ou blocs-diagrammes peut représenter un système, un dispositif, un module ou un code, qui comprend une ou plusieurs instructions exécutables pour mettre en oeuvre la ou les fonctions logiques spécifiées. Dans certaines implémentations, les fonctions associées aux blocs peuvent apparaître dans un ordre différent que celui indiqué sur les figures. Par exemple, deux blocs montrés successivement peuvent, en fait, être exécutés sensiblement simultanément, ou les blocs peuvent parfois être exécutés dans l'ordre inverse, en fonction de la fonctionnalité impliquée. Chaque bloc des schémas de principe et / ou de l'organigramme, et des combinaisons de blocs dans les schémas de principe et / ou l'organigramme, peuvent être mis en oeuvre par des systèmes matériels spéciaux qui exécutent les fonctions ou actes spécifiés ou effectuer des combinaisons de matériel spécial et d'instructions informatiques.

**[Description de l'invention]**

Dans la suite de la description, l'expression « **vecteur d'anomalie** » au sens de l'invention, correspond à un objet, ou à une structure de données, tel qu'un tableau à une dimension comportant des données relatives à des indicateurs de performance en anomalie (e.g. associés à ces données anormales) et/ou normaux. La représentation sous forme de vecteur est une représentation des données permettant par exemple d'avoir recours à des opérations de calcul matriciel, optimisés en termes de complexité de calcul et mémoire. Néanmoins il est à noter que ce n'est généralement pas le vecteur en lui-même qui détermine les indicateurs à risque. L'expression « **vecteur d'anomalie augmenté** » au sens de l'invention, correspond un vecteur d'anomalie comportant des données relatives à des indicateurs de performance en anomalie, ainsi que des données relatives à des indicateurs de performance à risque, lesdits indicateurs de performance à risque étant associés à des valeurs anormales qui risquent d'être générées par une infrastructure informatique. Un vecteur (e.g. d'anomalie augmenté) selon l'invention peut présenter plusieurs dimensions, s'apparenter alors à une ou plusieurs matrices et peut contenir des nombres tels que des entiers, des booléens, des valeurs alphanumériques, etc. Ainsi, un vecteur selon l'invention peut prendre en particulier la forme de dictionnaires ou de listes chainées.

L'expression « **passage en anomalie** » au sens de l'invention, peut correspondre à un instant où une métrique ou une pluralité de métriques (liées entre elles ou non) présentent un risque ou un résultat obtenu par calcul, de dépassement d'un seuil prédéterminé ou indicatif d'un risque de défaillance ou d'incident technique sur l'infrastructure informatique.

L'expression « **incident technique** » ou le terme « **défaillance** » au sens de l'invention, correspondent à un ralentissement ou un arrêt de fonctionnement d'une partie au moins de l'infrastructure informatique et de ses applications. Un incident technique peut être causé par une erreur réseau, un échec de processus ou encore une défaillance d'une partie du système.

L'expression « **infrastructure informatique** » au sens de l'invention correspond à un ensemble de structures informatiques (i.e. dispositifs informatiques) apte à faire fonctionner une application ou une chaine applicative. L'infrastructure informatique peut être un ou plusieurs serveurs, ordinateurs, ou encore contrôleurs industriels. Ainsi, l'infrastructure informatique peut correspondre à un ensemble de d'éléments comportant un processeur, une interface de communication et de la mémoire.

Par « **sonde** » ou « **sonde informatique** », on entend au sens de l'invention un dispositif, logiciel ou processus associé à un équipement qui permet d'effectuer, de gérer et/ou de faire remonter vers un équipement informatique des mesures des valeurs d'indicateurs de performance tels que des paramètres d'un système. Cela peut correspondre au sens large à des valeurs sur l'utilisation de ressources, des valeurs de paramètres d'exécution d'applications ou encore des valeurs de l'état de fonctionnement des ressources. Une sonde selon l'invention englobe donc également les logiciels ou processus capable de générer des journaux applicatifs ou des historiques des événements (« log file » en terminologie anglosaxonne). En outre, les sondes peuvent aussi correspondre à des capteurs physiques tels que des capteurs de température, d'humidité, de fuites d'eau, de consommation électrique, de mouvement, d'air conditionné, et de fumée.

L'expression « **indicateur de performance** » ou « **métrique** » au sens de l'invention, correspond à une propriété technique ou fonctionnelle d'un ou de plusieurs éléments d'une infrastructure informatique ou de son environnement représentant les conditions ou l'état de fonctionnement de ladite infrastructure informatique. En outre, un indicateur de performance peut correspondre à une combinaison de propriétés ou à des transformations mathématiques de propriétés. Par exemple, un indicateur de performance peut correspondre à la dérivée d'une propriété d'un élément de l'infrastructure informatique ou bien à un rapport entre les propriétés de deux éléments de l'infrastructure informatique.

L'expression « valeur de l'**indicateur de performance** » ou « valeur de la métrique » au sens de l'invention, correspond à une valeur de mesure ou de calcul d'une propriété technique ou fonctionnelle d'un ou de plusieurs éléments d'une infrastructure informatique représentant l'état de fonctionnement de ladite infrastructure informatique.

L'expression « **valeur associée à un indicateur de performance** » au sens de l'invention, correspond à une valeur d'un paramètre en lien avec un indicateur de performance. Cela peut correspondre à un identifiant d'un indicateur de performance, à une durée avant défaillance d'un indicateur, une valeur booléenne, ou encore le résultat d'une mesure visant à quantifier cet indicateur de performance. De préférence, une valeur associée à un indicateur de performance est un identifiant unique.

Le terme « **ressource** » au sens de l'invention correspond à des paramètres, des capacités ou des fonctions de dispositifs informatiques permettant le fonctionnement d'un système ou d'un processus applicatif. Un même dispositif informatique est associé généralement à plusieurs ressources. De même, une même ressource peut être partagée entre plusieurs processus applicatifs. Une ressource est généralement associée à un identifiant unique permettant de l'identifier au sein d'une infrastructure informatique. Par exemple, le terme « ressource » peut inclure : des disques réseaux caractérisés par des indicateurs de performance tels que par exemple par leurs entrées/sorties, la lecture/écriture sur des disques, des mémoires caractérisées par un indicateur de performance tel que le taux d'utilisation, un réseau caractérisé par sa bande passante, un processeur caractérisé par exemple par son utilisation (en pourcent) ou le taux d'occupation de ses caches, une mémoire vive caractérisée par la quantité allouée. On entend par « **utilisation des ressources** », la consommation d'une ressource par exemple par une application métier.

Le terme « **corrélation** » au sens de l'invention correspond à une relation statistique, causale ou non, entre deux variables ou les valeurs de deux variables. Au sens le plus large, toute association statistique est une corrélation mais ce terme désigne par exemple la proximité entre deux variables et l'établissement d'une relation d'ordre. Le terme « causale » ou « causalité » au sens de l'invention correspond à une relation statistique causale entre deux variables ou les valeurs de deux variables. En particulier, une des variables est une cause qui est entièrement ou partiellement responsable de la valeur de l'autre variable au travers d'un effet. La valeur de première variable peut par exemple être considérée comme une cause d'une valeur (actuelle ou future) de la seconde variable. Que cela soit pour la corrélation ou la causalité, une ou plusieurs variables peuvent avoir une relation statistique avec une ou plusieurs autres variables. En outre, une corrélation ou causalité indirect(e) au sens de l'invention correspond à l'existence d'une chaine de lien de corrélation ou de causalité entre une première variable et une autre variable. Par exemple, une première variable est corrélée à une seconde variable qui est elle-même corrélée à une troisième variable qui est enfin corrélée avec une autre variable.

Le terme « **apprentissage** » au sens de l'invention correspond à un procédé conçu pour définir une fonction f permettant de calculer une valeur de Y à partir d'une base de n observations labelisées (X1... n, Y1... n) ou non labelisées (X1... n). L'apprentissage peut être dit supervisé lorsqu'il se base sur des observations labelisées et non supervisé lorsqu'il se base sur des observations non labelisées. Dans le cadre de la présente invention, l'apprentissage est avantageusement utilisé pour la calibration du procédé et donc son adaptation à une infrastructure informatique particulière.

On entend par **« traiter »**, **« calculer »**, **« exécuter »**, **«déterminer »**, **« afficher »**, **« extraire »**, **« comparer »** ou plus largement « **opération exécutable** », au sens de l'invention, une action effectuée par un dispositif ou un processeur sauf si le contexte indique autrement. À cet égard, les opérations se rapportent à des actions et / ou des processus d'un système de traitement de données, par exemple un système informatique ou un dispositif informatique électronique, qui manipule et transforme les données représentées en tant que quantités physiques (électroniques) dans les mémoires du système informatique ou d'autres dispositifs de stockage, de transmission ou d'affichage de l'information. Ces opérations peuvent se baser sur des applications ou des logiciels.

Les termes ou expressions « **application** », « **logiciel** », « **code de programme** », et « **code exécutable** » signifient toute expression, code ou notation, d'un ensemble d'instructions destinées à provoquer un traitement de données pour effectuer une fonction particulière directement ou indirectement (e.g. après une opération de conversion vers un autre code). Les exemples de code de programme peuvent inclure, sans s'y limiter, un sous-programme, une fonction, une application exécutable, un code source, un code objet, une bibliothèque et/ou tout autre séquence d'instructions conçues pour l'exécution sur un système informatique.

On entend par « **processeur** », au sens de l'invention, au moins un circuit matériel configuré pour exécuter des opérations selon des instructions contenues dans un code. Le circuit matériel peut être un circuit intégré. Des exemples d'un processeur comprennent, sans s'y limiter, une unité de traitement central, un processeur graphique, un circuit intégré spécifique à l'application (ASIC) et un circuit logique programmable.

On entend par « **couplé** », au sens de l'invention, connecté, directement ou indirectement avec un ou plusieurs éléments intermédiaires. Deux éléments peuvent être couplés mécaniquement, électriquement ou liés par un canal de communication.

L'expression « **interface homme-machine** » au sens de l'invention correspond à tout élément permettant à un être humain de communiquer avec un ordinateur en particulier et sans que cette liste soit exhaustive, un clavier et des moyens permettant en réponse aux ordres entrés au clavier d'effectuer des affichages et éventuellement de sélectionner à l'aide de la souris ou d'un pavé tactile des éléments affichés sur l'écran. Un autre exemple de réalisation est un écran tactile permettant de sélectionner directement sur l'écran les éléments touchés par le doigt ou un objet et éventuellement avec la possibilité d'afficher un clavier virtuel.

L'expression « **objet connecté** » au sens de l'invention, correspond à un objet électronique connecté, par une connexion filaire ou sans fil, à un réseau de transport de données, de manière que l'objet connecté puisse partager des données avec un autre objet connecté, un serveur, un ordinateur fixe ou mobile, une tablette électronique, un smartphone ou tout autre dispositif connecté d'un réseau donné. De manière connue en soi, de tels objets connectés peuvent être, par exemple, des tablettes, des dispositifs d'éclairage intelligents, des outils industriels ou encore des smartphones.

Dans la suite de la description, les mêmes références sont utilisées pour désigner les mêmes éléments.

Comme cela a été mentionné, il existe de nombreux systèmes de maintenance d'infrastructure informatique. Néanmoins, les systèmes existants se contentent d'analyser un ou plusieurs indicateurs clés de la performance d'une infrastructure informatique et d'alerter une équipe de maintenance lorsque des valeurs de ce ou ces indicateurs dépassent des valeurs seuils ou présentent un comportement identifié précédemment comme source d'incident technique.

Ainsi, avec les méthodes de l'art antérieur, il est fréquent que l'équipe de maintenance soit informée relativement tard pour cause d'un manque de sensibilité de la méthode ou que l'alerte constitue une fausse alerte car le seuil préétabli est trop faible pour présenter une forte spécificité et donc discriminer efficacement des valeurs normales de valeurs anormales.

Comme cela sera détaillé par la suite, les inventeurs ont développé un dispositif et un procédé de détermination d'une durée estimée avant un incident technique présentant un équilibre entre spécificité et sensibilité. Avantageusement, un dispositif et un procédé de détermination d'une durée estimée avant un incident technique selon l'invention présenteront une spécificité supérieure à la sensibilité. En effet, bien que la sensibilité soit importante car elle est un indicateur de la proportion d'incidents réels prédits, la spécificité est encore plus importante car elle indique la capacité à ne pas sur-solliciter les opérateurs avec de fausses alertes.

**Pour cela, les inventeurs proposent en particulier un procédé et un dispositif capables** d'identifier des indicateurs de performance à risque de devenir en anomalie et, à partir de ces indicateurs à risque une durée estimée avant incident technique. En effet, au sein d'un système complexe (par exemple un ensemble de serveurs, d'applications ou d'équipements au sein d'un centre de données), certaines anomalies sur une ou des métriques (i.e. indicateur de performance) peuvent être causées par d'autres anomalies survenant sur d'autres métriques, entrainant ainsi un effet de cascade. Or, il est possible à partir de la connaissance de la cascade et des durées entre passage en anomalie des indicateurs de performance d'en déduire une durée estimée avant incident technique.

En se basant notamment sur des corrélations observées entre indicateurs de performance, l'objectif est en particulier d'identifier :

-    un ensemble d'indicateurs de performance comportant des indicateurs de performance présentant des valeurs anormales, et également

-    des indicateurs de performance qui présentent des valeurs normales au moment de l'identification des indicateurs de performance en anomalie mais qui ont une probabilité élevée de présenter, dans les minutes ou les heures suivantes, des valeurs anormales.

Ainsi, il est possible de déterminer une durée estimée avant un incident technique permettant à des équipes de maintenance d'intervenir plus rapidement et plus efficacement sur l'infrastructure informatique. Cela permet aussi de prioriser leurs actions.

Comme cela sera décrit par la suite, l'invention trouve en particulier son intérêt dans le suivi d'une infrastructure informatique d'une société de service comportant une pluralité de postes informatiques et de serveurs distribués utilisés par ses employés ou encore dans le suivi d'une infrastructure informatique d'une société mettant à disposition de ses clients des serveurs ou des machines virtuelles. Toutefois, la présente invention pourra tout aussi bien être mise en oeuvre dans une infrastructure informatique gérant les capteurs d'une société industrielle ou plus largement une pluralité d'objets connectés décentralisés.

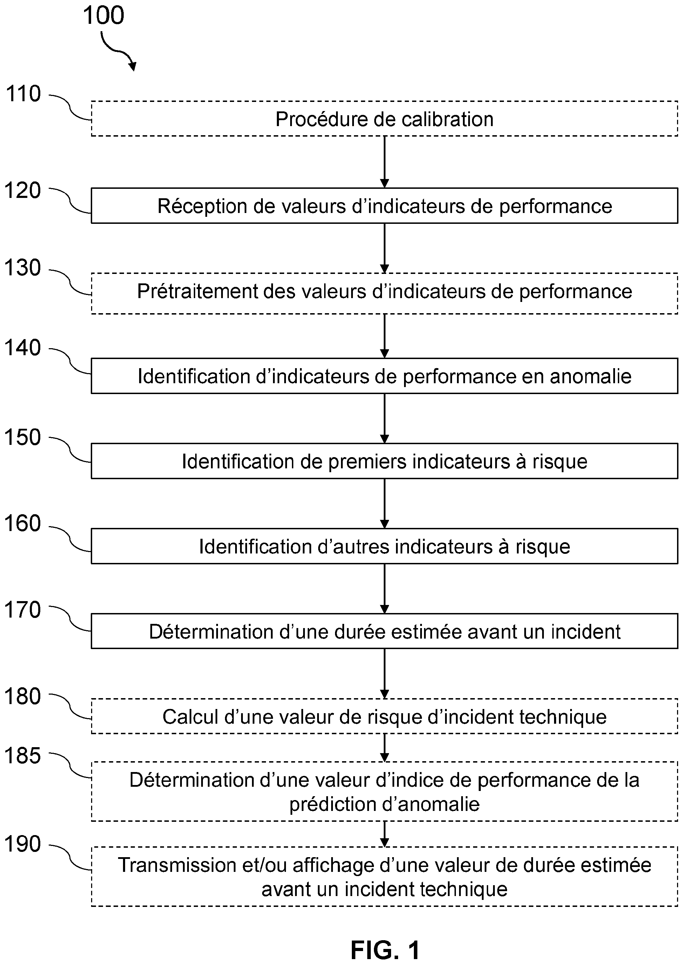

Comme cela est illustré à la **figure 1, selon un premier aspect,** l'invention porte sur un procédé 100 de détermination d'une durée estimée avant un incident technique dans une infrastructure informatique.

Ce procédé de détermination se fonde en particulier sur des valeurs d'indicateurs de performance. Les indicateurs de performance pouvant être utilisés dans le cadre de la présente invention sont par exemple : l'utilisation des ressources, les historique des événements, les erreurs logicielles, les erreurs matérielles, les temps de réponse, le trafic des applications, la charge de service, le trafic réseau, des modifications de fichiers, le nombre d'utilisateurs d'un service, le nombre de session, le nombre de processus, des valeurs de températures, des valeurs d'hygrométrie, et la consommation électrique. En particulier, les indicateurs de performance peuvent inclure : le débit du réseau, la latence du réseau, l'utilisation de CPU, l'utilisation de mémoire, le temps de réponse du serveur, le nombre de pages lentes et/ou le nombre de transactions.

Ces valeurs des indicateurs de performance sont par exemple générées par des sondes informatiques dédiées à la surveillance d'indicateurs de performance de l'infrastructure informatique. De telles sondes informatiques seront décrites en détail par la suite. Ainsi, le procédé peut être réalisé au moins en partie à partir de valeurs d'indicateurs de performance générées par des sondes dédiées à la surveillance d'indicateurs de performance de l'infrastructure informatique.

Dans le cadre d'un procédé selon l'invention, les valeurs des indicateurs de performances sont de préférence mesurées en continu. Le suivi en continu correspond par exemple à des mesures réalisées à une fréquence inférieure ou égale à une heure, de préférence inférieure ou égale à trente minutes, de façon plus préférée inférieure ou égale à cinq minutes, par exemple inférieure ou égale à dix secondes. A noter que tous les indicateurs de performance ne seront pas nécessairement mesurés à une fréquence identique.

En outre, dans le cadre d'un procédé selon l'invention, la durée estimée avant un incident technique dans une infrastructure informatique est de préférence déterminée en temps réel. En particulier, partant de la mesure de valeurs des indicateurs de performances, un procédé selon l'invention est de préférence configuré pour générer une valeur de durée estimée avant un incident technique dans un délai inférieur ou égale à dix minutes, de façon plus préférée inférieur ou égale à cinq minutes, de façon encore plus préférée inférieur ou égale à une minute. Ainsi, un procédé selon l'invention est configuré pour prédire des risques d'incident au moins quinze minutes avant leur occurrence prévue, de façon plus préférée au moins une heure avant leur occurrence prévue et de façon encore plus préférée au moins plusieurs heures avant leur occurrence prévue par exemple au moins trois heures avant leur occurrence prévue.

Comme cela est illustré à la **figure 1,** un procédé de détermination 100 selon l'invention comporte une étape de réception 120 de valeurs d'indicateurs de performance, une étape d'identification 140 d'indicateurs de performance en anomalie, une étape d'identification 150 de premiers indicateurs à risque, une étape d'identification 160 d'autres indicateurs à risque et une étape de détermination 170 d'une durée estimée avant un incident.

En outre, un procédé de détermination selon l'invention peut comporter une étape de prétraitement 130 des valeurs d'indicateurs de performance collectées, une étape de calcul 180 d'une valeur de risque d'incident technique et/ou une étape de transmission et/ou d'affichage 190 d'une valeur de durée estimée avant un incident technique et éventuellement d'une valeur de risque d'incident technique.

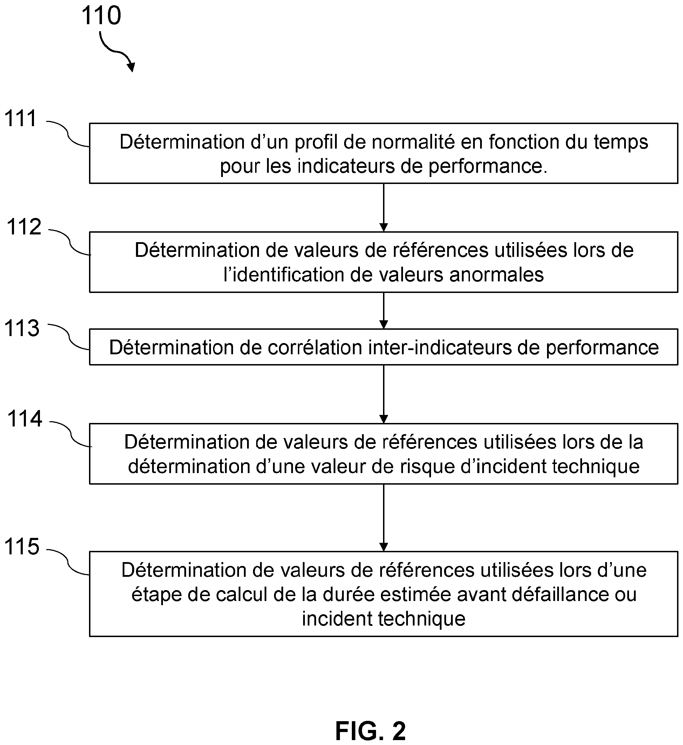

De plus, avantageusement, un procédé de détermination selon l'invention peut comporter également au préalable une procédure de calibration 110. La **figure 2** illustre les étapes possibles de la procédure de calibration 110.

Comme illustré, la procédure de calibration 110 peut comporter une étape de détermination 111 d'un profil de normalité en fonction du temps pour des indicateurs de performance, une étape de détermination 112 de valeurs de références utilisées lors de l'identification de valeurs anormales, une étape de détermination 113 de corrélation inter-indicateurs de performance, une étape de détermination 114 de valeurs de références utilisées lors de la détermination d'une valeur de risque d'incident technique (e.g. détermination d'une valeur de risque d'incident technique) et une étape de détermination 115 des valeurs de durée avant passage anomalie entre indicateurs de performance corrélés, utilisées en tout ou partie lors du calcul de la durée estimée avant défaillance ou incident technique.

Ces différentes étapes sont au moins en partie basées sur les principes généraux des mathématiques statistiques et plus particulièrement de l'apprentissage, qu'il soit supervisé ou non supervisé. En outre, de façon préférée, ces différentes étapes peuvent inclure des étapes de réduction de la dimensionnalité.

De façon préférée, la procédure de calibration 110 comporte des étapes d'apprentissages supervisés et/ou non supervisés basées sur des valeurs générées à partir de l'infrastructure informatique suivie. Ainsi, les valeurs de références pourront être particulièrement adaptées à l'infrastructure informatique suivie par un procédé et/ou un dispositif selon l'invention.

En outre, la procédure de calibration 110 peut débuter par un prétraitement des valeurs d'indicateurs de performance de façon à en faciliter l'exploitation ultérieure. Un prétraitement selon l'invention peut par exemple comporter : une normalisation des données, un rééchantillonnage, une agrégation de données, et/ou un recodage des variables.

Un tel procédé comporte de préférence une **étape 111 de détermination d'un profil de normalité en fonction du temps pour des indicateurs de performance**. Ce profil « normal » peut par exemple correspondre à un modèle de la population globale ou à des statistiques récapitulatives de la population globale. L'utilisation du profil « normal » permet ensuite de détecter les anomalies, les anomalies étant en particulier des observations dont les caractéristiques diffèrent significativement du profil normal par exemple dans le cadre d'une relation d'ordre 1.

De façon préférée, un procédé de détermination selon l'invention peut comporter une étape préalable d'apprentissage des valeurs dites normales d'indicateurs de performance. Il y a, en particulier, un entrainement d'un modèle (i.e. apprentissage) permettant de connaitre les valeurs dites normales en fonction du temps. De préférence, cette étape permet de générer un profil de valeurs pour les indicateurs de performance en fonction du temps. Ainsi, avantageusement, la procédure 110 de calibration comporte la détermination d'un profil de normalité en fonction du temps pour chacun des indicateurs de performance.

La plupart des entreprises suivent dans leur fonctionnement des modèles cycliques, avec des événements qui se reproduisent avec une fréquence horaire, quotidienne, hebdomadaire, mensuelle et parfois annuelle. Il en va de même pour les infrastructures informatiques soustendant le fonctionnement de ces entreprises. Le profil de normalité comporte alors de préférence une valeur de période.

Outre la saisonnalité des valeurs dans des données de séries chronologiques, la tendance est un autre facteur important. Ainsi, de façon préférée, la procédure 110 de calibration comporte la détermination 111 d'un profil de normalité en fonction du temps avec une périodicité inférieure ou égale à une année pour les indicateurs de performance ainsi qu'une composante d'évolution globale (i.e. tendance d'évolution des données, à la hausse ou à la baisse). La combinaison de la prise en compte de ces deux facteurs permet une bonne prévision d'une série chronologique.

En effet, les valeurs d'indicateur de performance dans le cadre de série temporelle comporteront généralement une composante normale, une composante de tendance ou variation globale (« trend » en terminologie anglo-saxonne) et un résidu. Dans le cadre de la détection d'anomalie, la composante normale concerne la façon dont les choses changent au cours d'une période donnée, par exemple une année, mois, semaine, jour ; la composante de tendance prend en compte la tendance de la façon dont les choses changent ; et c'est la valeur de résidu qui permettra de déterminer avec le plus de précision s'il y a ou non une anomalie. En particulier, les valeurs d'indicateur de performances sont des séries temporelles et sont donc associées à une temporalité (hebdomadaire, quotidien, horaire, mensuel, etc.). Dans ce contexte il existe de nombreuses méthodes permettant d'isoler des valeurs anormales de ces séries temporelles.

Par exemple, un procédé selon l'invention peut mettre en oeuvre une décomposition de tendance saisonnière basée sur de la régression locale STL (A Seasonal-Trend Décomposition Procedure Based on Loess. Clevland et al. Journal of Official Statistics. Vol. 6. No. I. 1990. pp. 3-73). Cette méthode permet de diviser le signal de série temporelle en trois parties : saisonnière, tendance et résidu. Une telle méthode présente en outre l'avantage de permettre un calcul rapide, même pour de très longues séries chronologiques et de grandes quantités de lissage des tendances et des saisons.

Alternativement, un procédé selon l'invention peut mettre en oeuvre une méthode Holt-Winters. Cette méthode permet, à partir d'une valeur de période, de calculer à chaque pas de temps estimés les composantes de résidu, de tendance et de saisonnalité. Le niveau de base initial sera la moyenne tandis que la composante de tendance initiale sera la moyenne de toutes les pentes calculées dans les deux premiers cycles saisonniers.

Une autre méthode appelée ARIMA (« Autoregressive integrated moving average » en terminologie anglo-saxonne) permet de prévoir les valeurs des indicateurs de performance et de participer à la détection des valeurs anormales. La méthode ARIMA est basée sur une approche selon laquelle plusieurs points du passé génèrent une prévision du prochain point avec l'ajout d'une variable aléatoire (e.g. ordre de différentiation) correspondant généralement à du bruit. De même que la méthode Holt-Winters, elle a pour effet de lisser la prédiction de la composante normale et de la composante de tendance. Ainsi, alternativement, un procédé selon l'invention peut mettre en oeuvre une méthode ARIMA. Avantageusement, le procédé comporte alors la réception de valeurs de paramètres associés au nombre de différences, au nombre d'autorégressions et aux coefficients d'erreur de prévision de façon à paramétrer la méthode.

En outre, quelle que soit la méthode utilisée pour décomposer le signal en ces trois composantes (i.e. résidu, composante normale et composante de tendance), un procédé selon l'invention peut comporter deux formes différentes de modèles de saisonnalité : la forme additive et la forme multiplicative. En effet, la manière dont ces trois composantes interagissent détermine la différence entre une série temporelle multiplicative et additive.

Dans sa forme additive, la variation de la fluctuation saisonnière d'un indicateur de performance (i.e. métrique) est un nombre constant, tandis que, sous sa forme multiplicative, elle représente un pourcentage de l'indicateur de performance. Ainsi, pour des valeurs plus grandes, la modification du cycle successif sera plus grande dans le cas d'une forme multiplicative.

Dans le cadre d'un modèle additif, les différentes composantes (i.e. normale et tendance) ont une incidence additive sur la série chronologique. Par exemple, dans un modèle de données dont un cycle est constitué par un mois, un modèle additif suppose que la différence entre les valeurs de janvier et de mars est approximativement la même chaque année. En d'autres termes, l'amplitude de l'effet saisonnier est la même chaque année. De même, le modèle suppose que les résidus ont à peu près la même taille dans toute la série. Ils constituent alors un composant aléatoire qui s'ajoute aux autres composants de la même manière pour toutes les parties de la série.

Néanmoins, dans le cadre de la présente invention, les inventeurs ont déterminé que, pour certains indicateurs de performance, un modèle multiplicatif sera plus adapté tandis qu'un modèle additif sera plus adapté pour d'autres indicateurs de performance. De façon préférée, un procédé selon l'invention comporte donc le calcul d'un modèle additif et d'un modèle multiplicatif.

En outre, les séries chronologiques peuvent être analysées et modélisées par des algorithmes tels que STL, ARIMA, LSTM et Holtwinters.

Une fois l'étape de calibration établie, il est possible d'utiliser ces données pour détecter les anomalies en les comparant aux données réelles.

L'identification des valeurs anormales décrite plus tard pourra se reposer au moins en partie sur un calcul d'une composante normale et éventuellement d'une composante de tendance. En effet, la valeur résultante de la suppression/déduction de la composante normale et éventuellement de la composante de tendance à la valeur d'un indicateur de performance consiste en une composante de résidu, qui peut correspondre à une valeur normale ou à une valeur anormale.

La détection de valeurs anormales, ou d'anomalie, comporte généralement l'identification d'un ou de plusieurs points de données très différents du reste des données. Il existe un très grand nombre de méthodes différentes permettant de réaliser une telle détection de valeurs anormales. La plupart se base sur la comparaison de valeurs mesurées à des valeurs de références. De façon à accélérer l'analyse de ces résidus, les inventeurs ont développé une étape préalable de calibration dont le résultat peut être utilisé lors de l'étape d'identification 140 d'indicateurs de performance en anomalie de façon à identifier plus rapidement les valeurs anormales. Ainsi, de façon préférée, la procédure de calibration 110 peut comporter une étape de **détermination 112 de valeurs de références pouvant être utilisées lors de l'identification de valeurs anormales,** et plus particulièrement lors de l'étape d'identification 140 d'indicateurs de performance en anomalie (i.e. présentant des valeurs anormales).

Parmi les nombreuses méthodes possibles pour identifier une valeur anormale, nous pouvons distinguer les approches non supervisées et les approches supervisées

Une étape de détermination 112 de valeurs de références selon l'invention peut mettre en oeuvre une méthode d'apprentissage non supervisée. En effet, alors que la détection d'anomalie peut être résolue par des algorithmes d'apprentissage supervisé si des informations sur le comportement anormal avant la modélisation sont disponibles, lors d'une première mise en place du procédé selon l'invention dans une infrastructure informatique ces informations peuvent manquer et les algorithmes d'apprentissage non supervisés sont privilégiés.

En particulier, la méthode d'apprentissage non supervisée peut reposer sur un modèle probabiliste. Ainsi, une méthode d'apprentissage non supervisée mise en oeuvre lors de l'étape de détermination 112 de valeurs de références peut par exemple comporter une recherche des valeurs extrêmes univariées ou une recherche des valeurs extrêmes multivariées. Lorsque l'étape de détermination 112 de valeurs de références selon l'invention comporte une recherche des valeurs extrêmes univariées, cette recherche peut par exemple être réalisée via un Test de Grubb's. Lorsque l'étape de détermination 112 de valeurs de références comporte une recherche des valeurs extrêmes multivariées, cette recherche peut par exemple être réalisée via une évaluation de la distance de Mahalanobis.

La méthode d'apprentissage non supervisée peut reposer sur une notion de proximité. Ainsi, avantageusement, une méthode d'apprentissage non supervisée mise en oeuvre lors de l'étape de détermination 112 de valeurs de références peut par exemple comporter une classification non supervisée, un calcul de la densité ou la recherche des plus proches voisins.

La classification non supervisée (clustering en terminologie anglosaxonne) n'est pas initialement dédiée à la détection d'observations anormales, puisqu'elle permet essentiellement de déterminer des groupes d'observations. Toutefois, les groupes contenant peu d'observations peuvent être considérés comme correspondant à des observations potentiellement anormales.

En particulier, la classification non supervisée permet de regrouper les données en groupes de densités différentes, les points d'un petit groupe correspondent généralement à des données anormales. Lors de l'étude d'une nouvelle valeur d'indicateur de performance, un procédé selon l'invention pourra comporter un calcul de la distance entre la nouvelle valeur d'indicateur de performance et les groupes. Si la nouvelle valeur est éloignée de tous les autres points des groupes de valeurs normales alors la nouvelle valeur peut être considérée comme une valeur anormale.

Le calcul de la densité peut par exemple correspondre aux algorithmes de type LOF (« Local Outlier Factor » en terminologie anglosaxonne), GLO (« Global-Local Outlier » en terminologie anglosaxonne) ou DBSVM « Density Based Support Vector Machines » en terminologie anglosaxonne). En particulier, le calcul de la densité peut comporter le calcul, pour chaque point, d'une densité de son voisinage local (k) puis le calcul d'un facteur de dépassement local d'un échantillon p comme moyenne des rapports de la densité de l'échantillon p et de la densité de ses plus proches voisins. Les valeurs anormales sont alors des points avec la plus grande valeur de facteur de dépassement local.

Un procédé de détermination selon l'invention peut également mettre en oeuvre des approches supervisées pour l'identification de valeurs anormales d'indicateurs de performance. En particulier, une étape de détermination 112 de valeurs de références selon l'invention peut alors comporter la mise en oeuvre d'une méthode d'apprentissage supervisée.

Parmi les méthodes d'apprentissage supervisées, les réseaux de neurones, les arbres de classification, la recherche des plus proches voisins ou les arbres de régression sont parmi les techniques d'apprentissage automatique les plus robustes et les plus efficaces dans le cadre d'un procédé selon l'invention.

Il est par exemple possible d'utiliser une étape d'apprentissage supervisé pour apprendre à des arbres à classer les points de valeurs anormales et de valeurs normales. Pour cela, le procédé comporte de préférence une étape préalable de réception de valeurs d'indicateurs de performance labelisées, lesdites valeurs d'indicateurs de performance labelisées ayant été de préférence générées au travers d'une méthode d'apprentissage non supervisée.

Dans un mode de réalisation préférée, un apprentissage non supervisé est utilisé pour identifier des valeurs anormales puis ces données sont utilisées pour entrainer un algorithme d'apprentissage supervisé tel qu'un algorithme de type CART (« Classification And Regression Trees » en terminologie anglosaxonne).

L'algorithme de type CART peut alors être configuré pour permettre d'attribuer un label « normal » ou « anomalie » de la valeur courante de la métrique.

Alternativement, un procédé selon l'invention peut mettre en oeuvre un algorithme de type ARIMA (« autoregressive integrated moving average » en terminologie Anglosaxonne) ou tout algorithme mis en place dans le cadre de l'étape 111. En particulier, une étape de détermination 112 de valeurs de références selon l'invention peut comporter un calcul d'une prochaine valeur d'indicateur de performance dans une série de données, ledit calcul comportant l'ajout d'une variable aléatoire, puis le procédé peut comporter une étape de comparaison de la valeur d'indicateur de performance mesurée par rapport à la prochaine valeur d'indicateur de performance calculée.

Dans le cadre de l'invention un réseau de neurone de type LSTM (« Long short-term memory » en terminologie anglosaxonne) peut aussi être utilisé.

De façon préférée, la procédure de calibration 110 peut comporter une étape de détermination 113 de corrélation inter-indicateurs de performance. De façon plus préférée, la procédure de calibration 110 peut comporter une étape de détermination d'un lien de causalité inter-indicateurs de performance. L'identification des relations de causalité peut être réalisée par différentes techniques, par exemple par l'étude des corrélations entre métriques.

En effet, le calcul du vecteur d'anomalie augmenté se base sur l'identification d'indicateur de performance à risque d'anomalie et cette prévision est avantageusement générée à l'aide des informations historiques de l'infrastructure informatique. En particulier, un procédé selon l'invention peut se baser sur des liens inter-métriques pour caractériser que le passage en anomalie (établi ou probable) d'une ou plusieurs métriques est de nature à entrainer le passage en anomalie d'une ou plusieurs autres métriques (i.e. indicateur de performance).

De façon préférée, la détermination 113 de corrélation inter-indicateurs de performance est réalisée via des méthodes statistiques comme celle de Pearson ou celle de Spearman. En particulier, cette détermination peut reposer sur des valeurs passées (e.g. 1 à 3 mois) générées lors du fonctionnement normal et/ou lors d'un passage en anomalie d'un indicateur de performance (on étudie alors le passage en anomalie des autres métriques).

En outre, les corrélations peuvent être calculées sur des signaux synchronisés temporellement ou en prenant en compte un décalage temporel (par exemple en utilisant des méthodes de calcul de corrélations croisées).

De façon plus préférée, une détermination 113 de corrélation inter-indicateurs de performance comporte l'établissement de corrélations entre au moins trois indicateurs de performances. Par exemple, une somme des valeurs d'indicateurs de performance A et B est corrélée avec un passage en anomalie d'un indicateur de performance C.

En outre, de façon préférée, une détermination 113 de corrélation inter-indicateurs de performance comporte des corrélations entre des données transformées d'une ou de plusieurs valeurs d'indicateur de performance. En particulier, la variation (i.e. valeur de dérivée) d'une ou plusieurs métriques est corrélée avec un passage en anomalie d'un indicateur de performance. Par exemple, la volatilité de l'indicateur de performance A est corrélée avec un passage en anomalie d'un indicateur de performance C.

De façon préférée, la procédure de calibration 110 peut comporter une étape de **détermination 114 de valeurs de références utilisées lors d'une détermination d'une valeur de risque d'incident technique.**

En effet, une fois qu'ont été identifié les indicateurs de performance en anomalie et indicateurs de performance à risque, ces indicateurs, par exemple sous la forme d'un vecteur d'anomalie augmenté, peuvent être étudiés de façon à déterminer s'ils sont ou non indicateurs d'un risque d'incident technique. Il existe de nombreuses méthodes pour déterminer une valeur de risque d'incident technique à partir d'un vecteur d'anomalie augmenté ou plus largement d'indicateurs de performance en anomalie et indicateurs de performance à risque identifiés. L'étape 180 de détermination d'une valeur de risque d'incident technique qui sera décrite par la suite peut en particulier s'appuyer sur des valeurs de références utilisées lors d'identification de risque d'incident technique.

Un procédé selon l'invention peut par exemple mettre en oeuvre des valeurs de seuils prédéterminés ou des motifs prédéterminés. Les valeurs de références peuvent alors être des seuils prédéterminés et par exemple renseignées par un opérateur *via* une interface graphique.

Néanmoins, les valeurs de références utilisées lors de l'identification de risque de défaillance sont de préférence déterminées lors d'une étape préalable de calibrage, ladite étape préalable de calibrage étant préférablement spécifique à l'infrastructure informatique étudiée.

En particulier, dans le cadre d'un procédé selon l'invention, il peut y avoir constitution et actualisation d'une base de données d'incident technique comportant des données d'indicateurs de performance en anomalie et indicateurs de performance à risque (e.g. sous la forme d'un vecteur d'anomalie augmenté) observées lors de la survenue, ou de préférence avant la survenue, d'un incident technique.

De façon préférée, les méthodes de détermination de risque d'incident technique peuvent également s'appuyer sur les méthodes d'apprentissage supervisée ou non supervisées.

Parmi les méthodes non supervisées, l'étape de détermination 114 de valeurs de références utilisées lors d'identification de risque d'incident technique peut comporter un partitionnement non supervisé des vecteurs d'anomalie augmenté de façon à identifier les vecteurs similaires et à les regrouper par cluster (i.e. paquet, groupe). Ensuite, une part d'apprentissage supervisé peut comporter un marquage de certains clusters en vecteurs d'anomalie augmenté associés ou non à des incidents techniques.

Dans la catégorie des apprentissages supervisés il est également possible, lors de la détection d'un incident technique, d'attribuer à tous les vecteurs d'anomalie augmentés précédent l'incident une étiquette correspondant à un vecteur d'anomalie augmenté associé à un incident technique. Ainsi, si à l'avenir un motif similaire à un tel vecteur d'anomalie augmenté est généré alors il sera considéré comme étant à probabilité de conduire à un incident technique.

En outre, il peut y avoir du bruit dans la détection des anomalies et la présence d'anomalies non corrélées à l'incident. Ainsi, il est avantageux dans le cadre de l'invention de mettre en oeuvre une étape de régularisation. La régularisation est une technique utilisée pour ajuster une fonction ou un modèle en ajoutant un terme de pénalité supplémentaire dans la fonction d'erreur. Cette technique de contrôle ou de réduction de la valeur des coefficients d'erreur est appelée méthode de retrait dans le cas de réseaux de neurones. Elle permet de limiter les risques associés au sur-apprentissage.

De façon préférée, l'étape de détermination 114 des valeurs de références utilisées lors d'une détermination d'une valeur de risque d'incident technique peut comporter un apprentissage supervisé comportant la mise en oeuvre d'un algorithme sélectionné parmi : Méthode des k plus proches voisins, forêt d'arbres décisionnels, ou Machine à vecteurs de support.

Par exemple, une étape de détermination 114 des valeurs de références utilisées lors d'une détermination d'une valeur de risque d'incident technique peut comporter un apprentissage semi supervisé. Dans ce cas, l'étape de détermination 114 des valeurs de références peut mettre en oeuvre un ou plusieurs algorithmes sélectionnés parmi : classification non supervisée, Analyse en Composantes Principales et méthode des k plus proches voisins.

De façon préférée, la procédure de calibration 110 peut comporter une étape de détermination **115 de valeurs de références utilisées lors d'une étape de calcul de la durée estimée avant défaillance ou incident technique**. Ces valeurs sont par exemple les valeurs de durée avant passage anomalie entre indicateurs de performance.

La détermination 115 de valeurs de références utilisées lors d'une étape de calcul de la durée estimée avant défaillance ou incident technique peut par exemple comporter, sur la base de données antérieures de l'infrastructure informatique, le calcul d'une durée, par exemple médiane ou moyenne, entre le passage d'un indicateur de performance en anomalie et la survenue d'un incident technique.

Avantageusement, la détermination 115 de valeurs de références utilisées lors du calcul de la durée estimée avant défaillance ou incident technique peut par exemple comporter sur la base de données antérieures de l'infrastructure informatique, le calcul d'une durée, par exemple médiane ou moyenne, entre le passage d'un premier indicateur de performance en anomalie et le passage en anomalie d'un second indicateur de performance corrélé au premier indicateur de performance en anomalie. Ainsi, l'estimation d'une durée avant incident technique peut être plus précise et plus robuste.

Avantageusement, suite à la phase d'apprentissage, un filtre sur les indicateurs de performance collectées peut être appliqué. Ainsi, les indicateurs de performance qui ne semblent jouer aucun rôle dans la prévision d'anomalies sont exclues de l'analyse. Les indicateurs de performance qui ne semblent jouer aucun rôle dans la prévision d'anomalies sont par exemple ceux dont les valeurs ne présentent aucune corrélation avec un incident identifié et qui ne présentent pas de corrélation avec au moins un indicateur de performance présentant une corrélation directe ou indirecte avec un incident identifié. Ainsi sont avantageusement conservés notamment pour certaines étapes de calibration (valeurs seuils...), les indicateurs de performance présentant sur la base d'un jeu de données d'entrainement, une corrélation, de préférence un lien de causalité, direct(e) avec un incident ou une corrélation, de préférence un lien de causalité, indirect(e) avec un incident.

Comme cela a été évoqué, une fois l'étape 110 de calibration ou d'apprentissage mise en oeuvre, un procédé de détermination selon l'invention dans sa mise en oeuvre classique comporte une étape de **réception 120 de valeurs d'indicateurs de performance.** Cette étape est généralement mise en oeuvre par un module 40 de collecte qui sera décrit plus avant lors de la description du dispositif selon l'invention.

Les valeurs d'indicateurs de performance sont généralement générées, au cours du temps par des sondes puis envoyées à un module de collecte centralisant ces données avant de les transférer par exemple à un module de traitement. Un module 40 de collecte de métriques (i.e. indicateur de performance) peut faire appel à une sonde 41 ou à une pluralité de sondes 41. La ou les sondes 41 permettent par exemple de collecter des données sur l'utilisation des ressources, la disponibilité des ressources, les historiques des événements, les erreurs matérielles, les erreurs logicielles, les temps de réponse, le trafic des applications, la charge de service, le trafic réseau des modifications de fichiers, le nombre d'utilisateurs d'un service, le nombre de session, le nombre de processus, des valeurs de températures, des valeurs d'hygrométrie, de fuite d'eau, de mouvement, de fumée et la consommation électrique de l'infrastructure 5 informatique. Le module 40 de collecte peut faire appel à un fichier de surveillance comportant des règles de collecte de métriques. Ces règles de collecte de métriques peuvent spécifier des données qui doivent être enregistrées lors de l'exécution de la brique applicative.

Ces mesures peuvent par exemple être réalisées à partir d'une sonde de type « Nigel's Monitor » (Nmon) ou « Performance Monitor » (Perfmon). Les sondes Nmon permettent par exemple d'afficher les données de CPU, mémoire, swap, réseau, des informations sur les utilisateurs, les groupes, les supports de stockages, sur l'utilisation du kernel, ou les processus les plus consommateurs. Les sondes de type Perfmon permettent de mesurer les performances d'une infrastructure informatique. Les informations collectées peuvent par exemple correspondre à des pourcentages d'utilisation de ressources, des temps de réponse, des temps de traitement mais également le statut des ports, le nombre de files de message JDBC ou JMS, le taux d'occupation du système de fichiers, le taux de fonctionnement du ramasse miettes ou récupérateur de mémoires (pour « garbage collecter » en anglais) pour les applications J2EE (pour « Java Enterprise Edition » en anglais).

Ces sondes peuvent être associées à chaque indicateur de performance (e.g. temps de réponse, ressource ou fonctionnalités) pour remonter les informations de mesure ou métriques, représentant par exemple le fonctionnement de l'infrastructure informatique. Pour chaque indicateur de performance, la ou les sondes définissent un identifiant d'indicateur de performance et une valeur d'indicateur de performance. Les valeurs des indicateurs de performance peuvent être suivies en continu ou à des intervalles configurables de façon à obtenir des informations pour chaque indicateur de performance en fonction du temps. Ces informations peuvent être stockées dans une mémoire. Dans certains modes de réalisation, un dispositif selon l'invention comporte une interface homme-machine permettant de définir les sondes sur chaque machine qui remontent les métriques provenant de l'utilisation des ressources de la machine.

Comme cela a été évoqué, de façon préférée, lors de la phase d'inférence, étape 120, seuls les indicateurs de performances réellement utilisées lors de l'analyse en étape 110 seront collectées. Le filtrage peut être appliqué au niveau central, mais aussi être déporté au niveau des différentes sondes ou capteurs pour limiter la charge du module central.

En outre, les valeurs d'indicateurs de performance peuvent faire l'objet d'un **prétraitement 130 des valeurs d'indicateurs de performance** de façon à en faciliter l'exploitation ultérieure.

Un prétraitement selon l'invention peut par exemple comporter : une normalisation des données, un rééchantillonnage, une agrégation de données, et/ou un recodage des variables.

Un prétraitement 130 selon l'invention peut comporter au moins une agrégation de données. Par exemple, les valeurs obtenues sur une plage de temps prédéterminée sont agrégées.

Avantageusement, un prétraitement 130 selon l'invention peut comporter des étapes différenciées de prétraitement pour chacun des indicateurs de performance.

En outre, comme cela a été présenté précédemment, les valeurs d'indicateurs de performances peuvent être soumises à une forte variation dans le temps, inhérente à l'activité ou l'exploitation normale de l'infrastructure informatique.

En particulier, le signal temporel généré par les sondes peut être découpé en trois composantes : une composante de variation globale (aussi appelée « trend » en terminologie anglosaxonne), une composante cyclique ou saisonnière et un résidu. Or, comme cela a été évoqué, c'est la valeur du résidu qui sera la plus adaptée pour identifier une valeur anormale et donc un comportement anormal de l'infrastructure informatique.

Ainsi, afin d'améliorer l'identification ultérieure de valeurs anormales, un procédé selon l'invention peut comporter une décomposition des valeurs de façon à supprimer une composante normale prédéterminée et éventuellement supprimer une composante de tendance prédéterminée. La suppression de la composante normale prédéterminée et éventuellement de la composante de tendance prédéterminée peut correspondre à une suppression multiplicative ou additive de cette ou ces composantes en fonction respectivement de la corrélation ou non du résidu à ces deux composantes. Avantageusement, un procédé selon l'invention peut comporter une suppression multiplicative et une suppression additive de cette ou ces composantes.

Ainsi, de façon préférée, l'étape d'identification 140 d'indicateurs de performance en anomalie peut être précédée par une étape de prétraitement des valeurs d'indicateurs de performance (i.e. données collectées), c'est-à-dire des indicateurs de performance, l'étape de prétraitement des données collectées comportant une suppression de la composante saisonnière. Alors, l'étape de prétraitement 130 des valeurs d'indicateurs de performance comporte, pour les valeurs de chacun des indicateurs de performance, une suppression de la composante normale préalablement calculée et avantageusement il comporte également une suppression de la variation globale préalablement calculée.

Un procédé de détermination selon l'invention comporte en outre une étape **d'identification 140 d'indicateurs de performance en anomalie.** Une telle étape peut être mise en oeuvre par un module 10 de traitement de données.

La détection d'observations atypiques ou d'anomalies est mise en oeuvre dans de nombreux domaines. Dans le cadre de la présente invention, sera considérée comme étant une valeur anormale, une observation atypique qui est probablement générée par un mécanisme différent de celui de la majorité des données habituellement observées.

L'identification 140 d'indicateur de performance en anomalie peut comporter la mise en oeuvre d'une méthode statistique permettant de générer des résultats binaires, des pourcentages de probabilité d'anomalie ou tout autre valeur permettant d'identifier un ou plusieurs indicateurs de performance en anomalie.

L'étape d'identification 140 d'indicateurs de performance en anomalie peut comporter la comparaison d'une valeur de chaque indicateur de performance à une valeur de référence de façon à par exemple déterminer si un seuil est dépassé. Ce type de méthodologie présente l'avantage d'être rapide à mettre en oeuvre et nécessiter peu de ressources de calcul.

Ainsi, l'identification 140 d'indicateur de performance en anomalie peut comporter la comparaison des valeurs d'indicateurs de performance, prétraités ou non, à des seuils prédéterminés.

Néanmoins, la comparaison à des seuils ne permet pas une discrimination optimale des valeurs normales et des valeurs anormales. Une autre méthode de détection de valeurs anormales, ou d'anomalie, comporte l'identification d'un ou de plusieurs points de données très différents du reste des données. Il existe un très grand nombre de méthodes différentes permettant de réaliser une telle détection de valeurs anormales.

Ensuite, l'étape d'identification 140 d'indicateur de performance en anomalie peut comporter un calcul d'une distance des valeurs de résidu obtenues à la normalité. Alternativement encore, l'identification 140 d'indicateur de performance en anomalie peut comporter la mise en oeuvre d'une méthode statistique permettant de générer des valeurs de distance à la normalité pour chacun des indicateurs de performance.

En particulier, il est possible de mettre en oeuvre des méthodes univariées ou éventuellement des méthodes multivariées de type distance de Mahalanobis ou Analyse en Composantes Principales.

En outre, pour chacun des indicateurs de performance, l'étape d'identification 140 d'indicateur de performance en anomalie peut comporter une segmentation des valeurs passées d'un indicateur de performance et un calcul de l'appartenance de la valeur de l'indicateur de performance à un des groupes constitués, en particulier à un groupe labélisé comme « anormal ». Ainsi, il est possible de déterminer si la valeur d'indicateur de performance est, ou non, une valeur normale.

Comme cela a été détaillé, l'étape 140 d'identification d'indicateur de performance en anomalie repose, de préférence, sur la construction préalable d'un modèle d'apprentissage supervisé qui sera en mesure de classer la valeur d'indicateur de performance comme une valeur normale ou une valeur anormale.

Par exemple, lors du processus de calibration, un modèle d'apprentissage supervisé peut avoir été entrainé pour déterminer si la valeur collectée d'un indicateur de performance est une valeur normale ou une valeur anormale.

Alternativement, lors du processus de calibration, un modèle d'apprentissage supervisé de type CART peut avoir été entrainé pour déterminer une étiquette pour les valeurs d'indicateurs de performance étudiés (e.g. « normaux » ou « en anomalie »).

Une fois les valeurs anormales identifiées, l'identification des indicateurs de performance peut correspondre au respect d'un ordre dans une suite de données tel qu'un vecteur de données. Ainsi, le résultat de l'identification des valeurs anormales peut prendre la forme d'un vecteur d'anomalie v0 tel qu'illustré ci-dessous.

$$v0 = [0\ 0\ 1\ 0\ 0\ 1\ 0\ 0\ 1\ 0\ 0\ 0\ 0\ 0\ 1\ 0\ 0\ 0\ 0\ 0\ 0\ 0\ 0\ 0\ 0\ 0\ 0\ 0\ 1\ 0\ 0\ 0]$$

Un tel vecteur comporte cinq indicateurs de performance en anomalie (i.e. 1) et 30 indicateurs de performance aux valeurs normales (i.e. 0).

Une fois les valeurs anormales identifiées et donc les « indicateurs de performance en anomalie » identifiés, il est possible d'identifier des indicateurs de performance n'étant pas en anomalie mais associés (i.e. corrélés) à ces « indicateurs de performance en anomalie » dit alors « indicateurs de performance à risque ».

Ainsi, un procédé de détermination selon l'invention comporte **une étape 150 d'identification de premiers indicateurs à risque.** Une telle étape peut être mise en oeuvre par un module 10 de traitement de données à partir d'une base 21 de corrélation entre indicateurs de performance.

Dans le cadre de la présente invention, l'identification de premiers indicateurs à risque ou la prévision d'indicateur de performance à risque de passer en anomalie dans un intervalle de temps prédéterminé, se base sur des liens inter-métriques pour caractériser que le passage en anomalie probable d'un ou plusieurs métriques (i.e. indicateur de performance). Cette identification peut être directe ou indirecte.

En particulier, dans le cadre d'une prédiction directe, l'évolution de la métrique (i.e. valeurs de d'un indicateur de performance) est telle que l'on prévoit son passage en anomalie. Par exemple avec une régression linéaire ou avec un calcul d'écart-type mettant en évidence une volatilité élevée.

En particulier, dans le cadre d'une prédiction indirecte, l'évolution de la métrique (i.e. valeurs d'un indicateur de performance) est telle que l'on utilise les liens inter-métriques pour caractériser que le passage en anomalie (établi ou probable) d'une ou plusieurs métriques est de nature à entrainer le passage en anomalie d'une ou plusieurs autres métriques.

L'étape de détermination d'indicateurs à risque peut être réalisée à partir d'une base de corrélation 21 entre indicateurs de performance. Cette base de corrélation est avantageusement générée lors de la détermination 113 de corrélation inter-indicateurs de performance. Une base de corrélation selon l'invention pourra comporter des données de corrélation entre indicateurs de performance avec par exemple des liens de corrélation non causale et/ou des liens de corrélation causale. Les liens de causalité peuvent être étiquetés de façon différenciée en fonction de la présence ou non d'une causalité. En outre, la base de corrélation pourra comporter des valeurs de durée avant passage en anomalie entre indicateurs de performance corrélés ou encore des indices de corrélation.

En référence au vecteur d'anomalie v0 illustré ci-dessus, l'étape 150 s'intéresse à déterminer les indicateurs de performances qui, selon une base 21 de corrélation entre indicateurs de performance, sont corrélés aux cinq indicateurs de performances identifiés comme en anomalie lors de l'étape 140.

Cette étape de détermination 150 comporte en particulier une identification d'indicateurs de performance de l'infrastructure informatique directement corrélés aux indicateurs en anomalie préalablement identifiés (lors de l'étape 140). Ces indicateurs de performance identifiés lors de l'étape 150 peuvent être appelés premiers indicateurs de performance à risque.

Les indicateurs de performance de l'infrastructure informatique corrélés aux indicateurs en anomalie préalablement identifiés peuvent être identifiés par une ou plusieurs bases (ou tables ou matrices) 21 de corrélation préalablement établies comme cela a été décrit précédemment. De telles bases 21 de corrélation comportent des liens entre un indicateur de performance et un ou plusieurs autres indicateurs de performance. En effet, certaines anomalies sur une ou des métriques peuvent être causées par d'autres anomalies survenant sur d'autres métriques, entrainant ainsi un effet de cascade.

En particulier, l'identification d'indicateurs de performance de l'infrastructure informatique corrélés aux indicateurs en anomalie identifiés peut avantageusement être réalisée sur la base d'une table de corrélation mémorisant les corrélations inter-indicateurs de performance.

A noter que la corrélation sera associée ou non à un lien de causalité. Ainsi, bien que le procédé puisse se baser sur des liens de corrélation n'étant pas obligatoirement causale, l'identification d'indicateurs de performance de l'infrastructure informatique corrélés aux indicateurs en anomalie peut avantageusement être réalisée sur la base d'une table (ou base ou matrice) de causalité mémorisant les liens de causalité inter-indicateurs de performance. L'identification des relations de causalité peut être réalisée par différentes techniques d'inférence causale.

Comme cela a été présenté, l'étape 150 d'identification de premiers indicateurs à risque comporte l'identification d'indicateurs de performance de l'infrastructure informatique corrélés aux indicateurs en anomalie. Ces indicateurs de performance identifiés peuvent être appelés premiers indicateurs de performance à risque. En effet, ils ont été obtenus par la recherche d'indicateurs de performance directement corrélés aux indicateurs de performance en anomalie.

Un procédé selon l'invention comporte également une **identification 160 d'autres indicateurs de performance à risque.** Ces autres indicateurs de performance à risque sont en particulier des indicateurs de performance de l'infrastructure 5 informatique corrélés aux premiers indicateurs de performance à risque. Ces indicateurs de performance peuvent aussi être appelés indicateurs de performance à risque de deuxième niveau. L'étape 160 d'identification d'indicateurs à risque peut se limiter à la recherche d'indicateurs de performance à risque de deuxième niveau. Néanmoins, de façon préférée, elle comporte en outre une identification d'indicateurs de performance de l'infrastructure informatique corrélés aux indicateurs de performance à risque de deuxième niveau. Ces indicateurs de performance à risque peuvent être appelés indicateurs de performance à risque de troisième niveau.

Ainsi, l'identification d'indicateurs de performance de l'infrastructure informatique corrélés aux indicateurs de performance à risque peut se poursuivre par exemple jusqu'à qu'il n'y ait plus de nouveaux indicateurs de performance de l'infrastructure informatique corrélés aux indicateurs de performance à risque.

Une telle étape peut être mise en oeuvre par le module 10 de traitement de données à partir d'une base 21 de corrélation entre indicateurs de performance.

Une fois des indicateurs de performance à risque identifiés, un procédé selon l'invention peut comporter une **étape de création d'un vecteur d'anomalies augmenté.** Une telle étape correspond généralement au résultat d'une étape de détermination d'indicateurs à risque. Néanmoins, lorsque l'étape de détermination d'indicateurs à risque se fait indépendamment par sous-système de l'infrastructure informatique alors cette étape peut comporter une concaténation de données pour former un vecteur d'anomalie augmenté.

Le vecteur d'anomalie augmenté comporte en particulier des valeurs associées aux indicateurs de performance en anomalie et des valeurs associées aux indicateurs de performance à risque. De façon particulière, le vecteur d'anomalie augmenté comporte des valeurs permettant de différencier au moins trois catégories d'indicateurs de performance à savoir par exemple : les indicateurs de performance n'étant pas en anomalie, les indicateurs de performance en anomalie et les indicateurs de performance à risque.

$$v1 = [0\ 0\ 1\ 0\ 0\ 1\ 2\ 0\ 1\ 0\ 2\ 0\ 0\ 0\ 0\ 1\ 2\ 0\ 0\ 0\ 0\ 3\ 0\ 0\ 0\ 2\ 0\ 0\ 2\ 0\ 0\ 1\ 0\ 0\ 0]$$

Par exemple, le vecteur v1 ci-dessus comporte des valeurs associées aux indicateurs de performance en anomalie (i.e. 1), des valeurs associées aux indicateurs de performance à risque de premier niveau (i.e. 2), et des valeurs associées aux indicateurs de performance à risque de deuxième niveau (i.e. 3). En outre, il comporte des valeurs associées aux indicateurs de performance n'appartenant pas à ces catégories (i.e. 0).

De préférence, le vecteur d'anomalie augmenté comporte en outre des indicateurs à risque de second niveau, lesdits indicateurs à risque de second niveau étant des indicateurs de performance de l'infrastructure informatique corrélés aux indicateurs à risques.

En outre, de façon préférée, dans le vecteur d'anomalie augmenté, la valeur associée aux indicateurs de performance à risque peut correspondre à une probabilité de devenir un indicateur en anomalie dans un intervalle de temps prédéterminé.

De façon plus préférée, dans le vecteur d'anomalie augmenté, les valeurs associées aux indicateurs de performance en anomalie ou à risque peut correspondre à une durée estimée avant passage en anomalie de l'indicateur de performance. La durée estimée avant incident technique correspond par exemple à une durée moyenne ou médiane observée par le passé entre le moment où un indicateur de performance a présenté une valeur anormale et un incident technique sur l'infrastructure informatique.

Ainsi, outre une notion de risque d'incident technique, un procédé selon l'invention peut permettre de générer une durée estimée avant un incident technique probable.

En outre, le vecteur d'anomalie augmenté peut comporter une mais aussi plusieurs séries de données. Dans ce cas il peut aussi être qualifié de matrice. Un vecteur d'anomalie augmenté comportant plusieurs séries de données peut permettre de générer une information plus précise sur les risques d'incident technique pesant sur l'infrastructure informatique.

Le vecteur d'anomalie augmenté est une structure de données qui exprime pour chaque métrique si elle est en anomalie ou si elle pourrait passer en anomalie, au vu de l'état courant observé de l'infrastructure informatique. De préférence, pour chaque scénario, le vecteur d'anomalie comporte une valeur de degré de confiance de passage en anomalie pour chacune des métriques (i.e. indicateur de performance). Ainsi, une valeur de risque d'incident technique déterminée dans le cadre du procédé pourra prendre en compte une valeur de degré de confiance calculée dans le cadre du procédé. Une valeur de degré de confiance peut par exemple être calculée sur la base de données antérieures des valeurs de coefficients de corrélation entre les indicateurs de performance.

De préférence, le vecteur d'anomalie augmenté comporte en outre, pour chacun des indicateurs à risque, une valeur de durée estimée avant passage en anomalie de l'indicateur de performance. Le vecteur d'anomalie augmenté peut aussi comporter en outre, pour chacun des indicateurs en anomalie et/ou à risque, une valeur de durée estimée avant un incident technique.

Avantageusement, un vecteur d'anomalie augmenté comporte des données au moins sur la valeur de durée estimée avant passage en anomalie et un score de confiance (e.g. calculé à partir de valeurs de degré de confiance).

Le vecteur d'anomalie augmenté peut comporter de nombreuses autres séries de données Le vecteur d'anomalie augmenté peut comporter des données sur les indicateurs de performance n'étant pas en anomalie ou à risque d'anomalie. Alternativement, il peut ne comporter des données que pour les indicateurs de performance en anomalie ou à risque. De façon préférée, la valeur associée aux indicateurs de performance est sélectionnée parmi : un statut actuel de l'indicateurs de performance (en anomalie, à risque, normal), une date de passage en anomalie prévue, une durée prévue avant passage en anomalie, un indice de confiance (i.e. valeur de degré de confiance) dans la prévision de passage en anomalie et/ou un indice de confiance dans la date de changement d'état prévue.

De façon plus préférée, une valeur associée aux indicateurs de performance est sélectionnée parmi : un statut actuel de l'indicateurs de performance (en anomalie, à risque, normal), une date de passage en anomalie prévue, et/ou une durée prévue avant passage en anomalie.

De façon encore plus préférée, une valeur associée aux indicateurs de performance correspond à une date de passage en anomalie prévue.

Une fois des indicateurs de performance à risque identifiés, un procédé selon l'invention comporte une **étape de détermination 170 d'une durée estimée avant un incident technique.** Une telle étape peut être mise en oeuvre par un module 10 de traitement de données. En outre, une telle étape peut se baser sur des valeurs de référence telle que des durées (e.g. médiane ou moyenne), entre le passage d'un premier indicateur de performance en anomalie et le passage en anomalie d'un second indicateur de performance corrélé au premier indicateur de performance en anomalie.

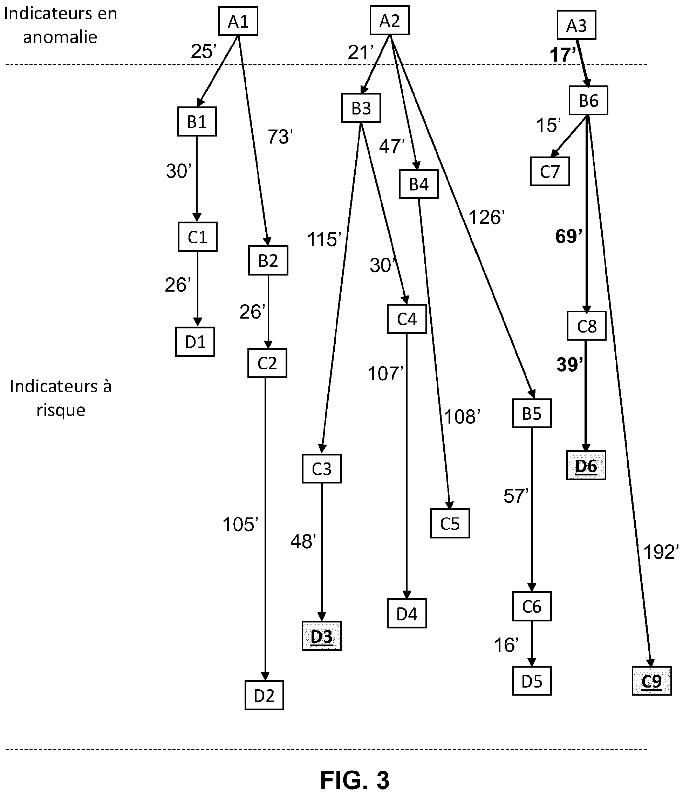

Une illustration schématique d'un calcul du plus court chemin est représentée à la figure 3. Dans cette illustration, trois indicateurs identifiés en anomalie sont représentés A1, A2, A3 avec six premiers indicateurs à risque B1, B2, B3, B4, B5, B6 auxquels ils sont corrélés. La figure 3 représente également neuf indicateurs à risque de deuxième niveau C1, C2, C3, C4, C5, C6, C7, C8, C9, et six indicateurs de troisième niveau D1, D2, D3, D4, D5, D6. Parmi ces vingtquatre indicateurs de performances, deux indicateurs de performance C9, D6 conduisent à une défaillance de l'infrastructure 5 informatique lorsqu'ils passent en anomalie. De plus, le passage effectif ou prévu en anomalie de la combinaison d'indicateurs A2, B3, C3 et D3 peut être corrélé à un vecteur de référence associé à un incident technique. En outre, la figure 3 illustre des durées avant passage en anomalie entre indicateurs de performance corrélés. Par exemple, lorsque l'indicateur de performance A1 passe en anomalie, il est estimé que l'indicateur B1 qui lui est corrélé passe en anomalie après vingt-cinq minutes (référencé « 25' » dans la figure 3) tandis que l'indicateur B2 qui lui est aussi corrélé passe en anomalie après soixante-treize minutes (référencé « 73' » dans la figure 3).

En particulier, l'étape de détermination 170 d'une durée estimée avant un incident technique peut comporter un calcul, à partir des indicateurs en anomalie et des indicateurs à risque identifiés, d'un plus court chemin entrainant un risque d'incident technique. Le plus court chemin pouvant correspondre à un chemin menant à une défaillance dont la somme des durées avant passage en anomalie entre indicateurs de performance corrélés est la plus courte.

Par exemple en référence à la figure 3, les trois chemins pouvant conduire à des incidents techniques (i.e. indicateurs D3, D6, C9) totalisent chacun respectivement : 184 minutes, 125 minutes, et 209 minutes. Ainsi, c'est le chemin impliquant A3, B6, C8 et D6 qui conduira probablement le plus rapidement à une défaillance. La durée estimée avant incident technique est alors de 125 minutes.

En particulier, l'étape de détermination 170 d'une durée estimée avant un incident technique peut comporter un calcul d'une durée estimée à partir des valeurs de durée avant passage en anomalie entre indicateurs de performance corrélés. Cela peut être fait pour chacun des indicateurs de performance constituant un chemin pouvant conduire à une défaillance de l'infrastructure informatique.

Ainsi, le procédé comporte :

une identification des chemins pouvant conduire à une défaillance, le calcul de la durée avant défaillance pour chacun de ces chemins et l'identification du chemin le plus court (i.e. le plus rapide) entrainant un risque d'incident technique. En outre, le calcul d'un plus court chemin entrainant un risque d'incident technique et le calcul d'une durée estimée avant un incident technique peuvent se faire concomitamment ou successivement.

Le plus court chemin peut également être pondéré avec des valeurs de degrés de confiance calculés pour chaque indicateur de performance à risque de passer en anomalie.

Avantageusement, l'étape de détermination 170 d'une durée estimée avant un incident technique pourra comporter la mise en oeuvre d'un algorithme basé sur la théorie des graphes.

En outre, un procédé selon l'invention peut comporter une étape de **détermination 180 d'une valeur de risque d'incident technique.** Une telle étape peut être mise en oeuvre par un module 10 de traitement de données.

La détermination 180 d'une valeur de risque d'incident technique correspond à une étape de réalisation d'une prévision d'incident technique sur l'infrastructure 5 informatique ou encore le calcul d'un risque d'incident technique. En effet, grâce aux données sur les indicateurs de performance à risque et en particulier grâce à un vecteur d'anomalie augmenté il est généré un ensemble de données reflétant un comportement probable de l'infrastructure 5 informatique dans les heures à venir.

La détermination 180 d'une valeur de risque d'incident technique peut être réalisée via de nombreuses méthodes. Généralement, la détermination 180 d'une valeur de risque d'incident technique s'appuiera sur une comparaison des données sur les indicateurs de performance à risque et en particulier d'un vecteur d'anomalie augmenté, à des valeurs de référence déterminées par exemple lors de l'étape 114.

Il est par exemple possible de comparer le nombre d'indicateur de performance en anomalie et d'indicateur de performance à risque à des seuils prédéterminés de façon à déterminer une valeur de risque.

En outre, il peut être mis en oeuvre des méthodes basées sur des méthodes statistiques permettant d'obtenir des résultats plus sensibles et plus spécifiques.

Il peut par exemple être mis en oeuvre une étape de mesure de distance entre le vecteur d'anomalie augmenté et des vecteurs de référence. Ces vecteurs de référence pourront par exemple comporter des vecteurs générés lors de conditions de fonctionnement normale de l'infrastructure informatique et des vecteurs d'anomalie générés avant et/ou pendant la survenue d'un incident technique sur l'infrastructure informatique.

De façon préférée, il peut par exemple être mis en oeuvre une étape de calcul de la similarité entre le vecteur d'anomalie augmenté et des vecteurs de référence, tels que des vecteurs de référence d'incident. Les vecteurs de référence d'incidents sont des vecteurs observés pendant ou avant un incident technique sur l'infrastructure informatique. La similarité peut alors être définie comme le pourcentage d'indicateurs de performances identiques entre deux vecteurs. Ainsi, lors de l'inférence, un seuil de similarité permet de dire si un vecteur peut être considéré comme un vecteur de référence d'incident.

De façon préférée, il peut par exemple être mis en oeuvre une étape de classification du vecteur d'anomalie augmenté au sein d'un modèle de classification de vecteur comportant des groupes de vecteur associé à un fonctionnement normal et des groupes de vecteurs associés à un incident technique. Pendant l'apprentissage, deux types de vecteurs sont appris : les vecteurs de référence d'incidents et les vecteurs de référence normaux.

En particulier, dans le cadre de l'étape 180 de détermination d'une valeur de risque d'incident technique, il peut y avoir une comparaison et le calcul d'une distance entre le vecteur d'anomalie augmenté et différents groupes prédéterminés associés à des défaillances. Par exemple, si la distance est élevée, c'est-à-dire par exemple supérieure à un seuil prédéterminé, alors une valeur de risque d'incident est générée indiquant une absence de risque, si la distance est proche (e.g. inférieure à un seuil prédéterminé) alors une valeur de risque d'incident est générée indiquant une prévision d'incident, et enfin, si la distance est moyenne (e.g. comprise entre deux seuils prédéterminés) alors la valeur de risque d'incident peut correspondre à une mise en surveillance. De façon préférée, le vecteur d'anomalie augmentée est comparé à des groupes de vecteurs d'incident technique et à des groupes de vecteurs normaux de façon à générer des valeurs de distance. Ensuite, les valeurs de distance entre le vecteur d'anomalie augmenté et chacun des deux groupes est comparée de façon à déterminer s'il y a ou non absence de risques.

En particulier, un premier regroupement peut être réalisé à l'aide d'un algorithme de type K-Means puis chaque vecteur d'anomalie augmenté est comparé aux vecteurs de référence normal et d'incident avec la méthode des k plus proches voisins.

En outre, les méthodes décrites ci-avant peuvent être améliorées avec la prise en compte de la date à laquelle les vecteurs ont été générés. Par exemple, une classification peut prendre en compte à la fois les composants du vecteur mais aussi le moment de son apparition. L'hypothèse est que les vecteurs proches les uns des autres (en temps) ont plus de chances d'appartenir au même groupe que les vecteurs éloignés. Cela s'applique en particulier lors de l'apprentissage et la classification des vecteurs de référence.

En outre, une fois des indicateurs de performance à risque identifiés, un procédé selon l'invention peut comporter une **étape de détermination 185 d'une valeur d'indice de performance de la prédiction d'anomalie.** Une telle étape peut être mise en oeuvre par un module 10 de traitement de données.

Une valeur d'indice de performance de la prédiction d'anomalie selon l'invention peut par exemple prendre la forme d'un pourcentage d'indicateurs de performance à risque d'anomalie confirmés. C'est-à-dire un pourcentage d'indicateurs de performance ayant été identifiés comme à risque d'anomalie (e.g. lors d'une étape de détermination 150 d'indicateurs à risque) et identifiés comme nouveaux indicateurs en anomalie confirmés entre le moment où ils ont été identifiés comme à risque et par exemple un instant où une information d'incident évité ou d'incident résolu a été réceptionnée par le dispositif 1 informatique. Elle peut aussi correspondre à la formule suivante :

$$IPerf = |IP \text{ à risque} \cap IP \text{ confirmés}| / |IP \text{ à risque} \cup IP \text{ confirmés}|$$

Avec :

IPerf : la valeur de l'indice de performance

IP à risque : les indicateurs de performance ayant été identifiés comme à risque d'anomalie

IP confirmés : les nouveaux indicateurs en anomalie confirmés

Par exemple, dans le cadre du procédé selon l'invention, il peut être identifié des indicateurs de performance en anomalie ainsi que des indicateurs à risque, c'est-à-dire des indicateurs de performance n'étant pas en anomalie à un instant donné mais étant corrélés à ces indicateurs de performance en anomalie. Lors d'une étape de détermination 185 d'une valeur d'indice de performance de la prédiction d'anomalie il pourra être déterminé des nouveaux indicateurs en anomalie confirmés (Réels) qui pourront être comparés aux indicateurs à risque (Prédits).

[Tableaux 1]

| | Prédits | Réels - Cas 1 | Réels - Cas 2 |
|---|---|---|---|
| Premiers indicateurs à risque / Nouveaux indicateurs en anomalie confirmés | B1, B2, B3, B4, B5, B6 | B1, B2, B3, B4, B5, B6 | B1, B2, B3, B4, B5 |
| Deuxièmes indicateurs à risque / Nouveaux indicateurs en anomalie confirmés | C1, C2, C3, C4, C5, C6, C7, C8, C9 | C1, C2, C3, C4, C5, C6, C7, C8, C10 | C1, C2, C3, C4, C5, C6, C11 |
| Troisièmes indicateurs à risque / Nouveaux indicateurs en anomalie confirmés | D1, D2, D3, D4, D5, D6 | D1, D2, D3, D4, D5, D6 | D1, D2, D3, D4, D5, D7 |
| Indice de performance | na | 90,9 % | 66,6 % |

Dans le tableau 1 ci-dessus, deux cas ont été illustrés. Dans le premier cas (Cas 1), les nouveaux indicateurs en anomalie confirmés sont presque identiques aux indicateurs prédits ainsi, l'indice de performance est élevé (90,9%). Au contraire, dans le second cas (Cas 2), il y a de nombreuses différences avec des indicateurs en anomalie non prédits tels que C11 et D7 ainsi que des indicateurs en anomalie prédits mais non réalisés tels que B6, C7, C8, C9 et D6. Il en résulte un indice de performance faible (66,6%).

De plus, un procédé selon l'invention peut comporter une étape de génération de valeurs de durée avant passage en anomalie actualisées. En particulier, un procédé selon l'invention peut alors comporter une comparaison entre des valeurs enregistrées de durée avant passage en anomalie et des valeurs de durée avant passage en anomalie actualisées. Une telle comparaison peut être utilisée pour déterminer la valeur d'indice de performance. Dans ce cas, la valeur d'indice de performance sera réduite considérant les différences observées entre valeurs de durée avant passage en anomalie.

En outre, le procédé peut aussi comporter alors une **étape de modification des valeurs de durées avant passage en anomalie** mémorisées dans la base de corrélation 21 en fonction des valeurs de durée avant passage en anomalie actualisées. Cette modification peut se faire de différentes façons par exemple en utilisant la valeur actualisée dans le calcul d'une moyenne, d'une médiane ou encore plus largement dans le calcul d'une nouvelle valeur qui sera fonction de l'ancienne valeur et de la valeur actualisée.

Une fois la valeur de durée estimée avant incident technique calculée, un procédé selon l'invention peut comporter une **étape 190 de transmission d'une valeur de durée estimée avant incident technique.** L'étape 190 peut également comporter une transmission d'une valeur d'indice de performance de prédiction d'anomalies et/ou une transmission d'une valeur de risque d'incident technique.

En outre, un procédé 100 selon l'invention peut permettre la génération de tableau de bord comportant par exemple :

> Le nombre d'anomalies (identifiées ou prédites) moyen,
> La répartition des anomalies (identifiées ou prédites) par ilot fonctionnel,
> L'évolution du nombre d'anomalies (identifiées ou prédites), par exemple par ilot fonctionnel,
> L'enchainement d'anomalies ayant engendrée l'incident technique,
> Le temps estimé avant l'incident technique et/ou
> Le pourcentage de confiance en la prédiction.

En outre, l'étape de transmission et/ou d'affichage 190 de cette valeur de durée estimée avant incident technique peut être précédée par une étape d'agrégation des prévisions. En effet, si une détermination d'une valeur de durée estimée avant incident technique ou de risque d'incident technique est réalisée toutes les 5 minutes, et qu'à la date T0 un incident est prévu pour se produire à la date T1=T0+1h, un procédé selon l'invention est avantageusement configuré pour de pas afficher à l'utilisateur un nouvel incident prévu aux dates T0+5, T0+10... T0+55, mais déterminer que l'incident est le même que celui prévu à T0 pour ne pas submerger l'opérateur d'alertes.

En outre, un procédé selon l'invention peut utiliser l'identification d'une même prévision réalisée à des intervalles de temps successifs pour modifier une valeur de degré de confiance et renforcer la confiance dans la prévision.

De façon préférée, un procédé selon l'invention comporte la génération de tab leau de bord comportant le temps estimé avant l'incident ou l'heure estimée de l'incident technique et le pourcentage de confiance en la prédiction.

Ainsi, les inventeurs ont développé une méthodologie permettant d'améliorer la détection de valeurs anormales au sein d'une multitude de métriques suivis en continu et analysés en temps réel. Cette invention repose notamment sur des analyses prédictives permettant de déterminer à partir de signaux faibles, le moment et la probabilité de survenue d'un incident technique à venir.

A partir des valeurs anormales correctement identifiées, il est possible d'évaluer le risque d'un incident par des comparaisons / corrélations avec des incidents survenus auparavant ou si possible par l'utilisation d'un modèle prédictif d'incident entrainé sur des données historiques.

Selon **un autre aspect,** l'invention porte sur un **dispositif** 1 de détermination d'une durée estimée avant un incident technique dans une infrastructure 5 informatique.

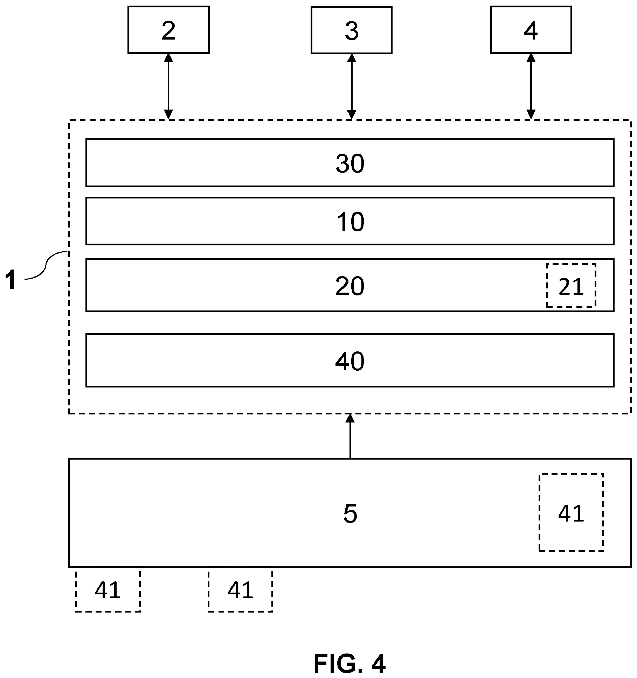

Un dispositif 1 ou dispositif 1 informatique selon l'invention est illustré à la **figure 4.**

Le dispositif 1 informatique est en particulier configuré pour déterminer une valeur de durée estimée avant un incident technique dans une infrastructure 5 informatique à partir de données (e.g. valeurs d'indicateurs de performance) collectées par des sondes dédiées à la surveillance d'indicateurs de performance de l'infrastructure 5 informatique.

Le dispositif 1 informatique peut comporter un **module de stockage 20.** Comme décrit par la suite, ce module 20 de stockage est configuré pour mémoriser toutes les données et valeurs générées lors des étapes 110 de calibration / apprentissage. En outre, il peut être configuré pour mémoriser des vecteurs augmentés générés au cours du temps ou des durées estimées. En particulier, il est configuré pour mémoriser au moins une base 21 de corrélation entre indicateurs de performance, ladite base 21 de corrélation comportant des valeurs de durée avant passage anomalie entre indicateurs de performance.

Les valeurs de durée avant passage anomalie entre indicateurs de performance peuvent correspondre en particulier à des durées observées (e.g. moyenne, médiane...) entre le passage en anomalie d'un premier indicateur de performance et le passage en anomalie d'un deuxième indicateur de performance étant corrélé au premier indicateur de performance.

Le module 20 de stockage est de préférence configuré pour mémoriser : un ou plusieurs profils de normalité en fonction du temps, des valeurs de références pouvant être utilisées lors de l'identification de valeurs anormales, une base de corrélation 21 (e.g. table ou matrice), une base de causalité, des valeurs de références utilisées lors d'identification d'un risque d'incident technique, et/ou des valeurs de références utilisées lors d'une étape de calcul de la durée estimée avant défaillance.

Pour cela, le module 20 de stockage peut comprendre n'importe quel support lisible par ordinateur connu dans l'art comprenant, par exemple, une mémoire volatile, telle qu'une mémoire vive statique (SRAM) et une mémoire vive dynamique (DRAM), et / ou une mémoire non volatile, telle que mémoire morte, mémoires flash, disques durs, disques optiques et bandes magnétiques. Le module 20 de stockage peut comprendre une pluralité d'instructions ou de modules ou d'applications pour effectuer diverses fonctionnalités. Ainsi, le module 20 de stockage peut mettre en oeuvre des routines, des programmes, ou des structures de données de type matricielle. De façon préférée, le module 20 de stockage peut comprendre un support lisible par un système informatique sous la forme d'une mémoire volatile, telle qu'une mémoire vive (RAM) et / ou une mémoire cache. Le module 20 de stockage, comme les autres modules, peut par exemple être connecté avec les autres composants du dispositif 1 via un bus de communication et une ou plusieurs interfaces de support de données.

En outre, le dispositif 1 informatique peut aussi comporter un **module de communication 30.**

Un module 30 de communication selon l'invention est en particulier configuré pour échanger des données avec des dispositifs tiers. Le dispositif 1 communique avec d'autres dispositifs ou systèmes informatiques et notamment des clients 2, 3, 4 grâce à ce module 30 de communication. Le module de communication permet en outre, de transmettre les données sur au moins un réseau de communication et peut comprendre une communication filaire ou sans fil. De préférence, la communication est opérée par l'intermédiaire d'un protocole sans fils tel que wifi, 3G, 4G, et/ou Bluetooth. Ces échanges de données peuvent prendre la forme d'envoi et de réception de fichiers. Par exemple, le module 30 de communication peut être configuré pour transmettre un fichier imprimable. Le module 30 de communication peut être en particulier configuré pour permettre la communication avec un terminal distant, dont un client 2,3,4. Un client est généralement, tout matériel et/ou logiciel apte à communiquer avec un dispositif conforme à l'invention. Le module 30 de communication peut également être configuré pour communiquer via une interface homme-machine.

En outre, le dispositif 1 informatique peut aussi comporter un **module 40 de collecte de métriques.** Un module 40 de collecte de métriques selon l'invention est en particulier configuré pour mesurer l'utilisation des ressources, la disponibilité des ressources, les historiques des événements, les erreurs matérielles, les erreurs logicielles, les temps de réponse, le trafic des applications, la charge de service, le trafic réseau des modifications de fichiers, le nombre d'utilisateurs d'un service, le nombre de session, le nombre de processus, des valeurs de températures, des valeurs d'hygrométrie, de fuite d'eau, de mouvement, de fumée et/ou la consommation électrique. Pour cela, le module 40 de collecte de métriques peut faire appel à une sonde 41 ou à une pluralité de sondes 41 déjà décrites.

Le dispositif 1 informatique comprend notamment **un module de traitement 10 de données.** Le dispositif 1 informatique, plus particulièrement le module de traitement 10 de données, est avantageusement configuré pour exécuter un procédé selon l'invention. Ainsi, le module 10 de traitement de données peut correspondre à tout agencement matériel et logiciel apte à permettre l'exécution d'instructions.

En particulier, le module 10 de traitement de données est configuré pour exécuter les étapes suivantes :

- une étape d'identification d'indicateurs de performance en anomalie, ladite identification comportant une analyse des valeurs d'indicateurs de performance de façon à identifier des valeurs anormales et des indicateurs de performance associés à ces valeurs anormales,

- une étape d'identification de premiers indicateurs à risque, à partir de la base 21 de corrélation entre indicateurs de performance, lesdits premiers indicateurs à risques étant des indicateurs de performances corrélés aux indicateurs de performance en anomalie identifiés,

- une étape d'identification d'autres indicateurs à risque, à partir de la base 21 de corrélation entre indicateurs de performance, lesdits autres indicateurs à risques étant des indicateurs de performances corrélés directement ou indirectement aux premiers indicateurs de performance à risque identifiés, et

- une étape de détermination d'une durée estimée avant un incident technique comportant :

    a. un calcul, à partir des indicateurs en anomalie et des indicateurs à risque identifiés, d'un plus court chemin entrainant un risque d'incident technique, et

    b. un calcul d'une durée estimée avant un incident technique, ladite durée estimée avant un incident technique étant calculée à partir des valeurs de durée avant passage en anomalie entre indicateurs de performance corrélés pour chacun des indicateurs de performance constituant le plus court chemin calculé.

En outre, le module 10 de traitement de données est avantageusement configuré pour exécuter les différents modes de réalisation d'un procédé selon l'invention.

Les différents modules ou référentiels sont distincts sur la figure 4 mais l'invention peut prévoir divers types d'agencement comme par exemple un seul module cumulant l'ensemble des fonctions décrites ici. De même, ces moyens peuvent être divisés en plusieurs cartes électroniques ou bien rassemblés sur une seule carte électronique.

Un dispositif 1 selon l'invention peut être intégré dans un système informatique et ainsi être apte à communiquer avec un ou plusieurs dispositifs externes tels qu'un clavier, un dispositif de pointage, un affichage, ou tout dispositif permettant à un utilisateur d'interagir avec le dispositif 1. Il faut comprendre que bien que non représenté, d'autres composants matériels et / ou logiciels pourraient être utilisé en conjonction avec un dispositif 1. Ainsi, dans un mode de réalisation de la présente invention, le dispositif 1 peut être couplé à une interface homme machine (IHM). L'IHM, comme déjà abordé, peut être utilisée pour permettre la transmission de paramètres aux dispositifs ou à l'inverse mettre à disposition de l'utilisateur les valeurs des données mesurées ou calculées par le dispositif. De façon générale, l'IHM est couplée de manière communicative avec un processeur et elle comprend une interface de sortie utilisateur et une interface d'entrée utilisateur. L'interface de sortie utilisateur peut comprendre une interface d'affichage et de sortie audio et divers indicateurs tels que des indicateurs visuels, des indicateurs audibles et des indicateurs haptiques. L'interface d'entrée utilisateur peut comprendre un clavier, une souris ou un autre module de navigation curseur tel qu'un écran tactile, un pavé tactile, une interface d'entrée de stylet et un microphone pour l'entrée de signaux audibles tels qu'un discours d'utilisateur, des données et des commandes qui peuvent être reconnues par le processeur.

Dans un mode de réalisation de la présente invention, le dispositif 1 peut être couplé à une interface de communication, par exemple une interface réseau de type Ethernet, FiberChannel, InfiniBand ou n'importe quels dispositifs permettant au dispositif 1 de communiquer avec un ou plusieurs autres dispositifs informatiques.

L'invention, selon **un autre aspect,** porte sur un **programme d'ordinateur,** ou produit programme d'ordinateur, comprenant des instructions pour mettre en oeuvre un procédé selon l'invention. Un tel programme d'ordinateur peut notamment être subdivisé en plusieurs sousprogrammes tels qu'un programme frontal et plusieurs logiciels arrière-plan.

Ainsi, comme cela sera apprécié par l'homme de l'art, des aspects de la présente invention peuvent être réalisés en tant que dispositif, système, procédé ou produit de programme d'ordinateur. En conséquence, des aspects de la présente invention peuvent prendre la forme d'un mode de réalisation entièrement matériel, d'un mode de réalisation entièrement logiciel (comprenant un micrologiciel, un logiciel résident, un microcode, etc.) ou d'un mode de réalisation particulier tel que comme un "circuit", "module" ou "système". En outre, des aspects de la présente invention peuvent prendre la forme d'un produit de programme d'ordinateur incorporé dans un ou plusieurs supports lisibles par ordinateur ayant un code de programme lisible par ordinateur incorporé sur celui-ci.

Toute combinaison d'un ou plusieurs supports lisibles par ordinateur peut être utilisée. Dans le contexte de ce document, un support lisible par ordinateur peut être n'importe quel support tangible qui peut contenir, ou stocker un programme à utiliser par ou en relation avec un système d'exécution d'instructions, appareil ou dispositif. Un support lisible par ordinateur peut être, par exemple, mais sans s'y limiter, un système, appareil ou dispositif électronique, magnétique, optique, électromagnétique, infrarouge ou semi-conducteur, ou toute combinaison appropriée de ce qui précède. Des exemples plus spécifiques (une liste non exhaustive) du support de stockage lisible par ordinateur comprendraient : un disque dur, une mémoire vive (RAM).

Un code de programme informatique pour effectuer des opérations pour des aspects de la présente invention peut être écrit dans n'importe quelle combinaison d'un ou plusieurs langages de programmation, y compris un langage de programmation orienté objet tel que Java, C ++ ou similaire, le langage de programmation "C" ou des langages de programmation similaires, un langage de script tel que Perl, ou des langages similaires, et/ou des langages fonctionnels tels que Meta Langage. Le code de programme peut s'exécuter entièrement sur l'ordinateur d'un utilisateur, en partie sur l'ordinateur d'un utilisateur et en partie sur un ordinateur distant ou entièrement sur l'ordinateur ou le serveur distant. Dans ce dernier scénario, l'ordinateur distant peut être connecté à l'ordinateur d'un utilisateur par tout type de réseau, y compris un réseau local (LAN) ou un réseau étendu (WAN).

Ces instructions de programme d'ordinateur peuvent être stockées sur un support lisible par ordinateur pouvant diriger un dispositif informatique (e.g. ordinateur, serveur...), de sorte que les instructions stockées dans le support lisible par ordinateur produisent un dispositif informatique configuré pour mettre en oeuvre l'invention.

Ainsi, des dispositif, système, procédé ou produit de programme d'ordinateur selon l'invention permettent outre la détection d'anomalies, de déterminer une valeur de durée estimée avant défaillance (i.e. d'incident technique) pour une infrastructure 5 informatique. Avantageusement l'invention permet de mettre en place une maintenance prédictive sur une infrastructure 5 informatique capable de permettre l'intervention du service de maintenance avant le déclenchement de l'interruption de service, de réduire ainsi les temps d'intervention du service de maintenance et de réduire l'occurrence des défaillances sur l'infrastructure informatique surveillée.

Cela est possible car contrairement à d'autres systèmes, l'invention comporte la détermination d'un risque de défaillance à partir de signaux faibles. Cela est particulièrement avantageux dans un contexte où l'anticipation des incidents est rendue complexe du fait de la grande variabilité des métriques de fonctionnement de ces infrastructures. Ici, l'enrichissement des indicateurs de performance en anomalie avec des données relatives à des indicateurs de performance à risque de devenir en anomalie permet de calculer une durée estimée avant défaillances à partir de signaux faibles qui auraient échappé aux services de suivi (ou qui ont déjà échappé à la vigilance des services de surveillances).

**Revendications**

**1.** Procédé (100) de détermination d'une durée estimée avant un incident technique dans une infrastructure (5) informatique, ledit procédé étant exécuté par un dispositif (1) informatique, ledit dispositif (1) informatique comportant un module (10) de traitement de données, un module (20) de stockage configuré pour mémoriser au moins une base (21) de corrélation entre indicateurs de performance, ladite base (21) de corrélation comportant des valeurs de durée avant passage en anomalie entre indicateurs de performance corrélés, et un module (40) de collecte, ledit procédé comprenant :

- une étape (120) de réception, par le module (40) de collecte, de valeurs d'indicateurs de performance d'une infrastructure (5) informatique,
- une étape (140) d'identification d'indicateurs de performance en anomalie, par le module (10) de traitement de données, ladite identification comportant une analyse des valeurs d'indicateurs de performance de façon à identifier des valeurs anormales et des indicateurs de performance associés à ces valeurs anormales,
- une étape (150) d'identification de premiers indicateurs à risque, par le module (10) de traitement de données à partir de la base (21) de corrélation, lesdits premiers indicateurs à risques étant des indicateurs de performances corrélés aux indicateurs de performance en anomalie identifiés,

le procédé étant **caractérisé par** :

- une étape (160) d'identification d'autres indicateurs à risque, par le module (10) de traitement de données à partir de la base (21) de corrélation, lesdits autres indicateurs à risque étant des indicateurs de performances à risque de deuxième niveau en étant corrélés aux premiers indicateurs de performance à risque identifiés ou des indicateurs de performances à risque de troisième niveau en étant corrélés aux indicateurs de performances à risque de deuxième niveau, et
- une étape (170) de détermination, par le module (10) de traitement de données, d'une durée estimée avant un incident technique dans l'infrastructure (5) informatique permettant l'identification d'un plus court chemin entrainant un risque d'incident technique, le plus court chemin étant un chemin menant à une défaillance dont une somme des durées avant passage en anomalie entre indicateurs de performance corrélés est la plus courte, ladite durée estimée avant un incident technique étant calculée à partir des valeurs de durée avant passage en anomalie de la base (21) de corrélation pour les premiers indicateurs à risque identifiés et les autres indicateurs à risque identifiés.

2. Procédé selon la revendication 1, **caractérisé en ce que** la valeur de durée avant passage en anomalie correspond à la durée entre une survenue d'une valeur anormale pour l'indicateur de performance concerné et une survenue d'une valeur anormale pour un indicateur de performance corrélé à l'indicateur de performance concerné.

3. Procédé selon l'une des revendications 1 ou 2, **caractérisé en ce que** l'étape (170) de détermination comporte un calcul, à partir des premiers indicateurs à risque identifiés et des autres indicateurs à risque identifiés, de plusieurs chemins entrainant un risque d'incident technique.

4. Procédé selon l'une des revendications 1 ou 2, **caractérisé en ce que** l'étape (170) de détermination comporte un calcul, à partir des premiers indicateurs à risque identifiés et des autres indicateurs à risque identifiés, d'un plus court chemin entrainant un risque d'incident technique.

5. Procédé selon l'une quelconque des revendications précédentes, **caractérisé en ce que** l'étape d'identification (140) d'indicateurs de performance en anomalie est précédée par une étape de traitement des données collectées, ladite étape de traitement des données collectées comportant une suppression d'une composante normale.

6. Procédé selon l'une quelconque des revendications précédentes, **caractérisé en ce que** l'identification des valeurs anormales est réalisée par une méthode statistique permettant de générer des valeurs de distances à la normalité.

7. Procédé selon l'une quelconque des revendications précédentes, **caractérisé en ce que** l'identification d'indicateurs de performance de l'infrastructure (5) informatique corrélés aux indicateurs en anomalie identifiés est réalisée sur la base de corrélations causales inter-indicateurs de performance.

8. Procédé selon l'une quelconque des revendications précédentes, **caractérisé en ce qu'** il comporte en outre une étape (180) de calcul d'une valeur de risque d'incident technique.

9. Procédé selon l'une quelconque des revendications 1 à 8, **caractérisé en ce qu'** il comporte en outre une étape (185) de détermination, par le module (10) de traitement de données, d'une valeur d'indice de performance de prédiction d'anomalies comportant :

- une réception de nouvelles valeurs d'indicateurs de performance ;

- une identification de nouveaux indicateurs en anomalie confirmés, ladite identification comportant une analyse des nouvelles valeurs d'indicateurs de performance de façon à identifier des valeurs anormales et des indicateurs de performance associés à ces valeurs anormales, et
- une comparaison des indicateurs à risque identifiés aux nouveaux indicateurs en anomalie confirmés de façon à générer une valeur d'indice de performance.

10. Procédé selon la revendication 9, **caractérisé en ce qu'**il comporte en outre une étape de génération de valeurs de durée avant passage en anomalie actualisées, une valeur de durée avant passage en anomalie correspondant à une durée entre une survenue d'une valeur anormale pour l'indicateur de performance concerné et une survenue d'une valeur anormale pour un indicateur de performance corrélé à l'indicateur de performance concerné.

11. Procédé selon la revendication 10, **caractérisé en ce que** la base (21) de corrélation comporte des valeurs de durées avant passage en anomalie entre indicateurs de performance, et **en ce que** le procédé comporte en outre une étape de modification des valeurs de durée avant passage en anomalie entre indicateurs de performance mémorisées dans la base (21) de corrélation en fonction des valeurs de durée avant passage en anomalie actualisées.

12. Procédé selon l'une quelconque des revendications 1 à 11, **caractérisé en ce qu'**il comporte une étape de mémorisation pour chaque indicateur de performance de : un identifiant unique et au moins un identifiant unique d'un autre indicateur de performance lui étant corrélé avec une valeur de durée avant passage en anomalie de cet autre indicateur de performance.

13. Programme d'ordinateur pour la détermination d'une durée estimée avant un incident technique dans une infrastructure informatique comprenant des instructions de code de programme pour l'exécution, sur un dispositif (1) informatique, d'un procédé de détermination selon l'une des revendications 1 à 12.

14. Support d'enregistrement sur lequel est enregistré un programme d'ordinateur pour la détermination d'une durée estimée avant un incident technique dans une infrastructure informatique selon la revendication 13.

15. Dispositif (1) informatique de détermination d'une durée estimée avant un incident technique dans une infrastructure (5) informatique, ledit dispositif (1) informatique comportant un module (10) de traitement de données, un module (20) de stockage configuré pour mémoriser au moins une base (21) de corrélation, ladite base (21) de corrélation comportant des valeurs de durée avant passage en anomalie entre indicateurs de performance, et un module (40) de collecte, ledit module (40) de collecte étant apte à, de préférence configuré pour, recevoir des valeurs d'indicateurs de performance de l'infrastructure (5) informatique, ledit module (10) de traitement de données étant configuré pour exécuter les étapes suivantes :

- une étape (140) d'identification d'indicateurs de performance en anomalie, ladite identification comportant une analyse des valeurs d'indicateurs de performance de façon à identifier des valeurs anormales et des indicateurs de performance associés à ces valeurs anormales,
- une étape (150) d'identification de premiers indicateurs à risque, à partir de la base (21) de corrélation, lesdits premiers indicateurs à risques étant des indicateurs de performances corrélés aux indicateurs de performance en anomalie identifiés,

le dispositif étant **caractérisé en ce qu'**il exécute :

- une étape (160) d'identification d'autres indicateurs à risque, à partir de la base (21) de corrélation, lesdits autres indicateurs à risques étant des indicateurs de performances à risque de deuxième niveau en étant corrélés aux premiers indicateurs de performance à risque identifiés ou des indicateurs de performances à risque de troisième niveau en étant corrélés aux indicateurs de performances à risque de deuxième niveau, et
- une étape (170) de détermination d'une durée estimée avant un incident technique permettant l'identification d'un plus court chemin entrainant un risque d'incident technique, le plus court chemin étant un chemin menant à une défaillance dont une somme des durées avant passage en anomalie entre indicateurs de performance corrélés est la plus courte, ladite durée estimée avant un incident technique étant calculée à partir des valeurs de durée avant passage en anomalie de la base (21) de corrélation pour les premiers indicateurs à risque identifiés et les autres indicateurs à risque identifiés.

**Patentansprüche**

1. Verfahren (100) zum Bestimmen einer geschätzten Dauer vor einem technischen Vorfall in einer Computerinfrastruktur (5), wobei das Verfahren durch eine Computervorrichtung (1) ausgeführt wird, wobei die Computervorrichtung (1) ein Datenverarbeitungsmodul (10), ein Abspeichermodul (20), das zum Speichern mindestens einer Korrelationsbasis (21) zwischen Leistungsindikatoren konfiguriert ist, wobei die Korrelationsbasis (21) Dauerwerte vor einem Abnormalitätsübergang zwischen korrelierten Leistungsindikatoren aufweist, und ein Erfassungsmodul (40) aufweist, das Verfahren umfassend:

   - einen Schritt (120) zum Empfangen von Leistungsindikatorwerten einer Computerinfrastruktur (5) durch das Erfassungsmodul (40),
   - einen Schritt (140) zum Identifizieren von Abnormalitätsleistungsindikatoren durch das Datenverarbeitungsmodul (10), wobei das Identifizieren eine Analyse von Leistungsindikatorwerten aufweist, um abnormale Werte und Leistungsindikatoren zu identifizieren, die mit diesen abnormalen Werten verknüpft sind,
   - einen Schritt (150) zum Identifizieren von ersten Risikoindikatoren durch das Datenverarbeitungsmodul (10) aus der Korrelationsbasis (21), wobei die ersten Risikoindikatoren Leistungsindikatoren sind, die mit den identifizierten Abnormalitätsleistungsindikatoren korrelieren,

   wobei das Verfahren **gekennzeichnet ist durch**:

   - einen Schritt (160) zum Identifizieren anderer Risikoindikatoren **durch** das Datenverarbeitungsmodul (10) aus der Korrelationsbasis (21), wobei die anderen Risikoindikatoren Risikoleistungsindikatoren einer zweiten Ebene, indem sie mit den ersten identifizierten Risikoleistungsindikatoren in Korrelation gebracht werden, oder Risikoleistungsindikatoren einer dritten Ebene sind, indem sie mit den Risikoleistungsindikatoren der zweiten Ebene in Korrelation gebracht werden, und
   - einen Schritt (170) zum Bestimmen einer geschätzten Dauer vor einem technischen Vorfall in der Computerinfrastruktur (5) **durch** das Datenverarbeitungsmodul (10), der das Identifizieren eines kürzesten Weges ermöglicht, der ein Risiko eines technischen Vorfalls verursacht, wobei der kürzeste Weg ein Weg ist, der zu einem Ausfall führt, dessen Summe der Dauern vor dem Abnormalitätsübergang zwischen korrelierten Leistungsindikatoren am kürzesten ist, wobei die geschätzte Dauer vor einem technischen Vorfall aus den Dauerwerten vor dem Abnormalitätsübergang der Korrelationsbasis (21) für die ersten identifizierten Risikoindikatoren und die anderen identifizierten Risikoindikatoren berechnet wird.

2. Verfahren nach Anspruch 1, **dadurch gekennzeichnet, dass** der Dauerwert vor dem Abnormalitätsübergang der Dauer zwischen einem Auftreten eines abnormalen Werts für den betreffenden Leistungsindikator und einem Auftreten eines abnormalen Werts für einen Leistungsindikator entspricht, der mit dem betreffenden Leistungsindikator korreliert.

3. Verfahren nach einem der Ansprüche 1 oder 2,
   **dadurch gekennzeichnet, dass** der Bestimmungsschritt (170) ein Berechnen, aus den ersten identifizierten Risikoindikatoren und den anderen identifizierten Risikoindikatoren, mehrerer Wege aufweist, die ein Risiko eines technischen Vorfalls verursachen.

4. Verfahren nach einem der Ansprüche 1 oder 2,
   **dadurch gekennzeichnet, dass** der Bestimmungsschritt (170) ein Berechnen, aus den ersten identifizierten Risikoindikatoren und den anderen identifizierten Risikoindikatoren, eines kürzesten Weges aufweist, der ein Risiko eines technischen Vorfalls verursacht.

5. Verfahren nach einem der vorstehenden Ansprüche,
   **dadurch gekennzeichnet, dass** dem Schritt (140) zum Identifizieren von Abnormalitätsleistungsindikatoren ein Schritt zum Verarbeiten der erfassten Daten vorausgeht, wobei der Schritt zum Verarbeiten der erfassten Daten ein Löschen einer normalen Komponente aufweist.

6. Verfahren nach einem der vorstehenden Ansprüche,
   **dadurch gekennzeichnet, dass** das Identifizieren der abnormalen Werte durch eine statistische Methode durchgeführt wird, die es ermöglicht, Werte der Abstände zu der Normalität zu generieren.

7. Verfahren nach einem der vorstehenden Ansprüche,

**dadurch gekennzeichnet, dass** das Identifizieren von Leistungsindikatoren der Computerinfrastruktur (5), die mit den identifizierten Abnormalitätsindikatoren korrelieren, auf der Basis kausaler Leistungsinterindikatoren erfolgt.

8.  Verfahren nach einem der vorstehenden Ansprüche,
    **dadurch gekennzeichnet, dass** es ferner einen Schritt (180) zum Berechnen eines Werts eines Risikos eines technischen Vorfalls aufweist.

9.  Verfahren nach einem der Ansprüche 1 bis 8,
    **dadurch gekennzeichnet, dass** es ferner einen Schritt (185) zum Bestimmen eines Leistungsindexwerts zum Vorhersagen von Anomalien durch das Datenverarbeitungsmodul (10) aufweist, der aufweist:

    - Empfangen von neuen Leistungsindikatorwerten;
    - Identifizieren von neuen bestätigten Abnormalitätsindikatoren, wobei dieses Identifizieren eine Analyse der neuen Leistungsindikatorwerte aufweist, um abnormale Werte und Leistungsindikatoren zu identifizieren, die mit diesen abnormalen Werten verknüpft sind, und
    - Vergleichen der identifizierten Risikoindikatoren mit den neuen bestätigten Abnormalitätsindikatoren, um einen Leistungsindexwert zu generieren.

10. Verfahren nach Anspruch 9, **dadurch gekennzeichnet, dass** es ferner einen Schritt zum Generieren von aktualisierten Dauerwerten vor dem Abnormalitätsübergang aufweist, wobei ein Dauerwert vor dem Abnormalitätsübergang einer Dauer zwischen einem Auftreten eines abnormalen Werts für den betreffenden Leistungsindikator und einem Auftreten eines abnormalen Werts für einen Leistungsindikator entspricht, der mit dem betreffenden Leistungsindikator korreliert.

11. Verfahren nach Anspruch 10, **dadurch gekennzeichnet, dass** die Korrelationsbasis (21) Dauerwerte vor dem Abnormalitätsübergang zwischen Leistungsindikatoren aufweist, und **dass** das Verfahren ferner einen Schritt zum Modifizieren der Dauerwerte vor dem Abnormalitätsübergang zwischen Leistungsindikatoren, die in der Korrelationsbasis (21) gespeichert sind, in Abhängigkeit von den aktualisierten Dauerwerten vor dem Abnormalitätsübergang aufweist.

12. Verfahren nach einem der Ansprüche 1 bis 11,
    **dadurch gekennzeichnet, dass** es einen Schritt zum Speichern für jeden Leistungsindikator aufweist von: einem eindeutigen Identifikator und mindestens einem eindeutigen Identifikator eines anderen Leistungsindikators, der mit einem Dauerwert vor dem Abnormalitätsübergang dieses anderen Leistungsindikators korreliert.

13. Computerprogramm zum Bestimmen einer geschätzten Zeit bis zu einem technischen Vorfall in einer Computerinfrastruktur, umfassend Programmcodeanweisungen für die Ausführung eines Bestimmungsverfahrens nach einem der Ansprüche 1 bis 12 auf einer Computervorrichtung (1).

14. Aufzeichnungsmedium, auf dem ein Computerprogramm für das Bestimmen mindestens einer geschätzten Dauer vor einem technischen Vorfall in einer Computerinfrastruktur nach Anspruch 13 aufgezeichnet ist.

15. Computervorrichtung (1) zum Bestimmen einer geschätzten Dauer vor einem technischen Vorfall in einer Computerinfrastruktur (5), wobei die Computervorrichtung (1) ein Datenverarbeitungsmodul (10), ein Abspeichermodul (20), das zum Speichern mindestens einer Korrelationsbasis (21) konfiguriert ist, wobei die Korrelationsbasis (21) Dauerwerte vor dem Abnormalitätsübergang zwischen Leistungsindikatoren aufweist, und ein Erfassungsmodul (40) aufweist, wobei das Erfassungsmodul (40) zum Empfangen von Leistungsindikatorwerten der Computerinfrastruktur (5) geeignet ist, vorzugsweise konfiguriert ist, wobei das Datenverarbeitungsmodul (10) zum Ausführen der folgenden Schritte konfiguriert ist:

    - einen Schritt (140) zum Identifizieren von Abnormalitätsleistungsindikatoren, wobei das Identifizieren eine Analyse von Leistungsindikatorwerten aufweist, um abnormale Werte und Leistungsindikatoren zu identifizieren, die mit diesen abnormalen Werten verknüpft sind,
    - einen Schritt (150) zum Identifizieren von ersten Risikoindikatoren aus der Korrelationsbasis (21), wobei die ersten Risikoindikatoren Leistungsindikatoren sind, die mit den identifizierten Abnormalitätsleistungsindikatoren korrelieren,

    wobei die Vorrichtung **dadurch gekennzeichnet ist, dass** sie ausführt:

- einen Schritt (160) zum Identifizieren anderer Risikoindikatoren aus der Korrelationsbasis (21), wobei die anderen Risikoindikatoren Risikoleistungsindikatoren der zweiten Ebene, indem sie mit den ersten identifizierten Risikoleistungsindikatoren korrelieren, oder Risikoleistungsindikatoren der dritten Ebene sind, indem sie mit den Risikoleistungsindikatoren der zweiten Ebene in Korrelation gebracht werden, und
- einen Schritt (170) zum Bestimmen einer geschätzten Dauer bis zu einem technischen Vorfall der das Identifizieren eines kürzesten Weges ermöglicht, der einen technischen Risikovorfall verursacht, wobei der kürzeste Weg ein Weg ist, der zu einem Ausfall führt, dessen Summe der Dauern vor einem Abnormalitätsübergang zwischen korrelierten Leistungsindikatoren am kürzesten ist, wobei die geschätzte Dauer vor einem technischen Vorfall aus den Dauerwerten vor dem Abnormalitätsübergang der Korrelationsbasis (21) für die ersten identifizierten Risikoindikatoren und die anderen identifizierten Risikoindikatoren berechnet wird.

**Claims**

1. Method (100) for determining an estimated duration before a technical incident in a computing infrastructure (5), said method being carried out by a computing device (1), said computing device (1) comprising a data processing module (10), a storage module (20) configured to store at least one base (21) for correlation between performance indicators, said correlation base (21) comprising values of a duration before becoming anomalous between correlated performance indicators, and a collection module (40), said method comprising:

   - a step (120) in which the collection module (40) receives performance indicator values for a computing infrastructure (5),
   - a step (140) in which the data processing module (10) identifies anomalous performance indicators, said identification comprising an analysis of the performance indicator values so as to identify anomalous values and performance indicators associated with these anomalous values,
   - a step (150) in which the data processing module (10) identifies first at-risk indicators from the correlation base (21), said first at-risk indicators being performance indicators correlated with the identified anomalous performance indicators,

   the method being **characterized by:**

   - a step (160) in which the data processing module (10) identifies other at-risk indicators from the correlation base (21), said other at-risk indicators being second-level at-risk performance indicators by being correlated with the first identified at-risk performance indicators, or third-level at-risk performance indicators by being correlated with the second-level at-risk performance indicators, and
   - a step (170) in which the data processing module (10) determines an estimated duration before a technical incident in the computing infrastructure (5), enabling the identification of a shortest path leading to a risk of a technical incident, the shortest path being a path leading to a failure of which a sum of the durations before becoming anomalous between correlated performance indicators is the shortest, said estimated duration before a technical incident being calculated from the values of a duration before becoming anomalous from the correlation database (21) for the first identified at-risk indicators and the other identified at-risk indicators.

2. Method according to claim 1, **characterized in that** the value of a duration before becoming anomalous corresponds to the duration between the occurrence of an abnormal value for the relevant performance indicator and the occurrence of an abnormal value for a performance indicator correlated with the relevant performance indicator.

3. Method according to either claim 1 or 2, **characterized in that** the determination step (170) comprises a calculation, on the basis of the first identified at-risk indicators and the other identified at-risk indicators, of a plurality of paths leading to a risk of a technical incident.

4. Method according to either claim 1 or 2, **characterized in that** the determination step (170) comprises a calculation, on the basis of the first identified at-risk indicators and the other identified at-risk indicators, of a shortest path leading to a risk of a technical incident.

5. Method according to any one of the preceding claims, **characterized in that** the step of identifying (140) anomalous performance indicators is preceded by a step of processing the collected data, said step of processing the collected data comprising deleting a normal component.

**6.** Method according to any one of the preceding claims,
**characterized in that** the identification of abnormal values is carried out by a statistical method making it possible to generate values of distances from normality.

**7.** Method according to any one of the preceding claims,
**characterized in that** the identification of performance indicators for the computing infrastructure (5) correlated with the identified anomalous indicators is carried out on the basis of causal correlations between performance indicators.

**8.** Method according to any one of the preceding claims,
**characterized in that** it further comprises a step (180) of calculating a technical incident risk value.

**9.** Method according to any one of claims 1 to 8, **characterized in that** it further comprises a step (185) in which the data processing module (10) determines an anomaly prediction performance index value, comprising:

- receipt of new performance indicator values;
- identification of new confirmed anomalous indicators, said identification including an analysis of the new performance indicator values so as to identify anomalous values and performance indicators associated with these anomalous values, and
- comparison of the identified at-risk indicators with the new confirmed anomalous indicators so as to generate a performance index value.

**10.** Method according to claim 9, **characterized in that** it further comprises a step of generating updated values of a duration before becoming anomalous, a value of a duration before becoming anomalous corresponding to a time between the occurrence of an abnormal value for the relevant performance indicator and the occurrence of an abnormal value for a performance indicator correlated with the relevant performance indicator.

**11.** Method according to claim 10, **characterized in that** the correlation base (21) comprises values of durations before becoming anomalous between performance indicators, and **in that** the method further comprises a step of modifying the values of a duration before becoming anomalous between performance indicators stored in the correlation base (21) according to the updated values of a duration before becoming anomalous.

**12.** Method according to any one of claims 1 to 11, **characterized in that** it comprises a step of storing for each performance indicator: a unique identifier and at least one unique identifier of another performance indicator correlated with it, together with a value of a duration before becoming anomalous of this other performance indicator.

**13.** Computer program for determining an estimated duration before a technical incident in a computing infrastructure, comprising program code instructions for carrying out, on a computing device (1), a determination method according to one of claims 1 to 12.

**14.** Recording medium on which a computer program is recorded for determining an estimated duration before a technical incident in a computing infrastructure, according to claim 13.

**15.** Computing device (1) for determining an estimated duration before a technical incident in a computing infrastructure (5), said computing device (1) comprising a data processing module (10), a storage module (20) configured to store at least one correlation base (21), said correlation base (21) comprising values of a duration before becoming anomalous between performance indicators, and a collection module (40), said collection module (40) being able to, preferably configured to, receive performance indicator values for the computing infrastructure (5), said data processing module (10) being configured to carry out the following steps:

- a step (140) of identifying anomalous performance indicators, said identification comprising an analysis of the performance indicator values so as to identify abnormal values and performance indicators associated with these abnormal values,
- a step (150) of identifying first at-risk indicators from the correlation base (21), said first at-risk indicators being performance indicators correlated with the identified anomalous performance indicators,

the device being **characterized in that** it carries out:

- a step (160) of identifying other at-risk indicators from the correlation base (21), said other at-risk indicators being second-level at-risk performance indicators by being correlated with the first identified at-risk performance indicators, or third-level at-risk performance indicators by being correlated with the second-level at-risk performance indicators, and

- a step (170) of determining an estimated duration before a technical incident, enabling the identification of a shortest path leading to a risk of a technical incident, the shortest path being a path leading to a failure of which a sum of the durations before becoming anomalous between correlated performance indicators is the shortest, said estimated duration before a technical incident being calculated from the values of a duration before becoming anomalous from the correlation base (21) for the first identified at-risk indicators and the other identified at-risk indicators.

100

110 ─ Procédure de calibration

120 ─ Réception de valeurs d'indicateurs de performance

130 ─ Prétraitement des valeurs d'indicateurs de performance

140 ─ Identification d'indicateurs de performance en anomalie

150 ─ Identification de premiers indicateurs à risque

160 ─ Identification d'autres indicateurs à risque

170 ─ Détermination d'une durée estimée avant un incident

180 ─ Calcul d'une valeur de risque d'incident technique

185 ─ Détermination d'une valeur d'indice de performance de la prédiction d'anomalie

190 ─ Transmission et/ou affichage d'une valeur de durée estimée avant un incident technique

FIG. 1

**110**

**111** Détermination d'un profil de normalité en fonction du temps pour les indicateurs de performance.

**112** Détermination de valeurs de références utilisées lors de l'identification de valeurs anormales

**113** Détermination de corrélation inter-indicateurs de performance

**114** Détermination de valeurs de références utilisées lors de la détermination d'une valeur de risque d'incident technique

**115** Détermination de valeurs de références utilisées lors d'une étape de calcul de la durée estimée avant défaillance ou incident technique

**FIG. 2**

**FIG. 3**

FIG. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3066844 A1

**Littérature non-brevet citée dans la description**

- **CLEVLAND et al.** A Seasonal-Trend Décomposition Procedure Based on Loess. *Journal of Official Statistics.*, 1990, vol. 6 (I), 3-73